# EUROPEAN PATENT APPLICATION

(11) **EP 4 738 345 A1**
(43) Date of publication of application: **06.05.2026**
(21) Application number: 24852037.1
(22) Date of filing: 19.06.2024
(51) Int. Cl.: G10L 15/22, G10L 17/24, G10L 17/18, G10L 17/02, G10L 17/06, G10L 25/60, G06F 3/16, G06F 21/31

(54) **ELECTRONIC DEVICE AND METHOD FOR RECOGNIZING SPEAKER BY USING EXTERNAL ELECTRONIC DEVICE**

(30) Priority: 04.08.2023 KR 20230102485; 04.09.2023 KR 20230117294
(71) Applicant: Samsung Electronics Co., Ltd., Suwon-si, Gyeonggi-do 16677 (KR)
(72) Inventor: CHOI, Chanhee, Suwon-si, Gyeonggi-do 16677 (KR); KIM, Kyungtae, Suwon-si, Gyeonggi-do 16677 (KR); YOON, Hyundon, Suwon-si, Gyeonggi-do 16677 (KR)
(74) Representative: Walaski, Jan Filip
(86) International application number: PCT/KR2024/008473
(87) International publication number: WO 2025/033680

(57) **Abstract**

This electronic device may comprise: a memory storing instructions; a communication circuit; a microphone; and at least one processor. The instructions may, when executed individually or collectively by the at least one processor, cause the electronic device to: obtain a voice signal; generate, from the voice signal including a wake-up word, a first recognition result for the wake-up word; transmit the first recognition result to a server connected to one or more external electronic devices capable of recognizing the wake-up word; receive, from the server, a second recognition result for a user who uttered the wake-up word; and execute, based on the second recognition result, a designated function in the electronic device with respect to the user. The second recognition result may include identification information indicating the user, obtained from an external electronic device, in which the user is registered, among the one or more external electronic devices.

## Description

### [Technical Field]

The following descriptions relate to an electronic device for recognizing a speaker using an external electronic device and a method thereof.

### [Background Art]

An electronic device may obtain a sound signal from the outside via a microphone. For example, the sound signal may include a speech or voice uttered by a speaker. For example, the electronic device may recognize the speaker based on the sound signal.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device may include communication circuitry. The electronic device may include a microphone. The electronic device may include at least one processor. The at least one processor may be configured to obtain a voice signal via the microphone. The at least one processor may be configured to generate, from the voice signal including a wake-up word, a first recognition result for the wake-up word. The at least one processor may be configured to transmit the first recognition result to a server connected to one or more external electronic devices capable of recognizing the wake-up word. The at least one processor may be configured to receive, from the server, a second recognition result for a user who uttered the wake-up word. The at least one processor may be configured to execute, based on the second recognition result, a designated function with respect to the user in the electronic device. The second recognition result may include identification information indicating the user, obtained from an external electronic device, in which the user is registered, among the one or more external electronic devices.

A method performed by an electronic device may include obtaining a voice signal. The method may include generating, from the voice signal including a wake-up word, a first recognition result for the wake-up word. The method may include transmitting the first recognition result to a server connected to one or more external electronic devices capable of recognizing the wake-up word. The method may include receiving, from the server, a second recognition result for a user who uttered the wake-up word. The method may include executing, based on the second recognition result, a designated function with respect to the user in the electronic device. The second recognition result may include identification information indicating the user, obtained from an external electronic device, in which the user is registered, among the one or more external electronic devices.

A non-transitory computer-readable storage medium, when executed by at least one processor of an electronic device including communication circuitry and a microphone, may store one or more programs including instructions that cause the electronic device to obtain a voice signal via the microphone. The non-transitory computer-readable storage medium, when executed by the at least one processor, may store one or more programs including instructions that cause the electronic device to generate, from the voice signal including a wake-up word, a first recognition result for the wake-up word. The non-transitory computer-readable storage medium, when executed by the at least one processor, may store one or more programs including instructions that cause the electronic device to transmit the first recognition result to a server connected to one or more external electronic devices capable of recognizing the wake-up word. The non-transitory computer-readable storage medium, when executed by the at least one processor, may store one or more programs including instructions that cause the electronic device to receive, from the server, a second recognition result for a user who uttered the wake-up word. The non-transitory computer-readable storage medium, when executed by the at least one processor, may store one or more programs including instructions that cause the electronic device to execute, based on the second recognition result, a designated function with respect to the user in the electronic device. The second recognition result may include identification information indicating the user, obtained from an external electronic device, in which the user is registered, among the one or more external electronic devices.

An electronic device may include communication circuitry. The electronic device may include a microphone. The electronic device may include at least one processor. The at least one processor may be configured to obtain a voice signal via the microphone. The at least one processor may be configured to generate, from the voice signal including a wake-up word, a first recognition result for the wake-up word. The at least one processor may be configured to broadcast the first recognition result to one or more external electronic devices capable of recognizing the wake-up word. The at least one processor may be configured to receive a second recognition result for the wake-up word broadcast from an external electronic device in which the user is registered among the one or more external electronic devices and a third recognition result for a user who uttered the wake-up word. The at least one processor may be configured to execute, based on the third recognition result, a designated function with respect to the user in the electronic device. The third recognition result may include identification information indicating the user.

A method performed by an electronic device may include obtaining a voice signal. The method may include generating, from the voice signal including a wake-up word, a first recognition result for the wake-up word. The method may include broadcasting the first recognition result to one or more external electronic devices capable of recognizing the wake-up word. The method may include receiving a second recognition result for the wake-up word broadcast from an external electronic device in which the user is registered among the one or more external electronic devices and a third recognition result for a user who uttered the wake-up word. The method may include executing, based on the third recognition result, a designated function with respect to the user in the electronic device. The third recognition result may include identification information indicating the user.

A non-transitory computer-readable storage medium, when executed by at least one processor of an electronic device including communication circuitry and a microphone, may store one or more programs including instructions that cause the electronic device to obtain a voice signal via the microphone. The non-transitory computer-readable storage medium, when executed by the at least one processor, may store one or more programs including instructions that cause the electronic device to generate, from the voice signal including a wake-up word, a first recognition result for the wake-up word. The non-transitory computer-readable storage medium, when executed by the at least one processor, may store one or more programs including instructions that cause the electronic device to broadcast the first recognition result to one or more external electronic devices capable of recognizing the wake-up word. The non-transitory computer-readable storage medium, when executed by the at least one processor, may store one or more programs including instructions that cause the electronic device to receive a second recognition result for the wake-up word broadcast from an external electronic device in which the user is registered among the one or more external electronic devices and a third recognition result for a user who uttered the wake-up word. The non-transitory computer-readable storage medium, when executed by the at least one processor, may store one or more programs including instructions that cause the electronic device to execute, based on the third recognition result, a designated function with respect to the user in the electronic device. The third recognition result may include identification information indicating the user.

An electronic device may include communication circuitry. The electronic device may include a microphone. The electronic device may include at least one processor. The at least one processor may be configured to obtain a voice signal via the microphone. The at least one processor may be configured to identify, from the voice signal including a wake-up word, a user who uttered the voice signal. The at least one processor may be configured to transmit a signal including a first recognition result for the wake-up word and a second recognition result for the user to a server connected to one or more external electronic devices capable of recognizing the wake-up word based on identifying that the user is a user registered in the electronic device. The first recognition result may include at least one of a recognition accuracy value of the wake-up word in the voice signal identified by the electronic device, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

A method performed by an electronic device may include obtaining a voice signal. The method may include identifying, from the voice signal including a wake-up word, a user who uttered the voice signal. The method may include transmitting a signal including a first recognition result for the wake-up word and a second recognition result for the user to a server connected to one or more external electronic devices capable of recognizing the wake-up word based on identifying that the user is a user registered in the electronic device. The first recognition result may include at least one of a recognition accuracy value of the wake-up word in the voice signal identified by the electronic device, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

A non-transitory computer-readable storage medium, when executed by at least one processor of an electronic device including communication circuitry and a microphone, may store one or more programs including instructions that cause the electronic device to obtain a voice signal via the microphone. The non-transitory computer-readable storage medium, when executed by the at least one processor, may store one or more programs including instructions that cause the electronic device to identify, from the voice signal including a wake-up word, a user who uttered the voice signal. The non-transitory computer-readable storage medium, when executed by the at least one processor, may store one or more programs including instructions that cause the electronic device to transmit a signal including a first recognition result for the wake-up word and a second recognition result for the user to a server connected to one or more external electronic devices capable of recognizing the wake-up word based on identifying that the user is a user registered in the electronic device. The first recognition result may include at least one of a recognition accuracy value of the wake-up word in the voice signal identified by the electronic device, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

### [Description of the Drawings]

FIG. 1 is a block diagram of an electronic device in a network environment according to various embodiments.
FIG. 2A illustrates an example of a method of recognizing a wake-up word and a speaker based on a voice signal.
FIG. 2B illustrates an example of a method of registering a speaker based on a voice signal.
FIG. 2C illustrates an example of a method in which a plurality of electronic devices obtain a voice signal and share a recognition result of the obtained voice signal.
FIG. 3 illustrates an example of a method in which an electronic device recognizes a speaker using an external electronic device.
FIG. 4 illustrates an example of a multiple device wake-up (MDW) environment including an electronic device and one or more external electronic devices.
FIG. 5 illustrates an example of an operation flow of a method in which an electronic device including a speaker recognition model recognizes a wake-up word of a voice signal.
FIG. 6 illustrates an example of an operation flow of a method in which an electronic device that does not include a speaker recognition model recognizes a wake-up word of a voice signal.
FIG. 7 illustrates an example of an operation flow of a method in which an electronic device generates a speaker recognition model.
FIG. 8 illustrates an example of an operation flow of a method in which an electronic device recognizes a speaker using an external electronic device.
FIG. 9 is a block diagram indicating an integrated intelligence system according to various embodiments.
FIG. 10 is a diagram indicating a form in which relationship information between a concept and an operation is stored in a database, according to various embodiments.
FIG. 11 is a diagram indicating a screen in which an electronic device processes a voice input received through an intelligent app, according to various embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

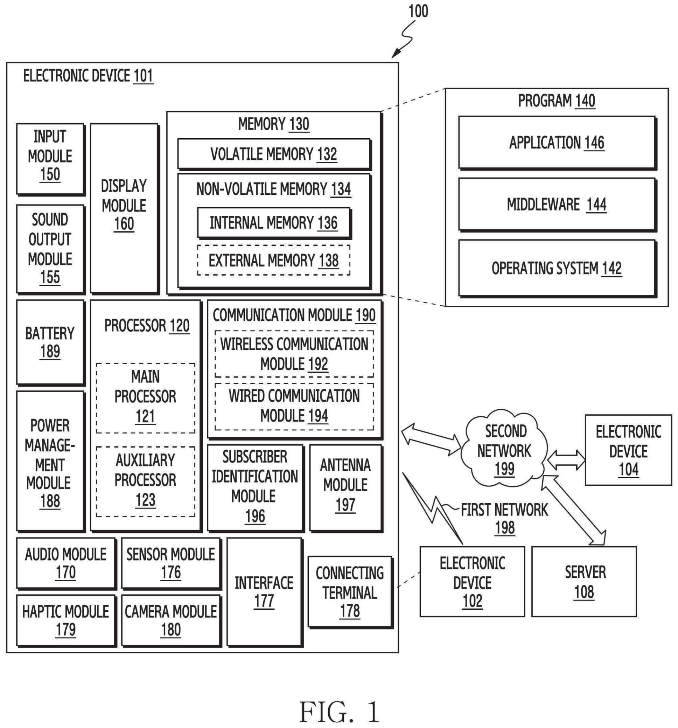

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

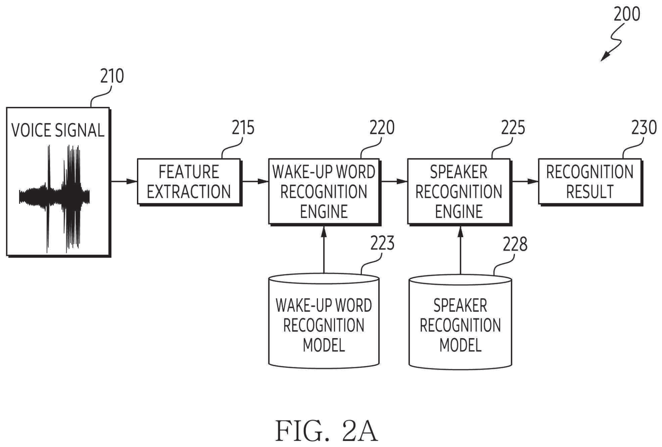

FIG. 2A illustrates an example of a method of recognizing a wake-up word and a speaker based on a voice signal.

FIG. 2A illustrates an example 200 of a method in which an electronic device 101 performs recognition of a wake-up word and recognition of a speaker based on a voice signal 210. The electronic device 101 of FIG. 2A may indicate an example of the electronic device 101 of FIG. 1.

Referring to the example 200, the electronic device 101 may obtain the voice signal 210. For example, the electronic device 101 may obtain the voice signal 210 from the outside of the electronic device 101 via a microphone(e.g., the input module 150 of FIG. 1). For example, the voice signal 210 may include a speech. For example, the voice signal 210 may also include the speech, noise, or background sound. For example, the speech may be uttered by a user of the electronic device 101 or an external electronic device (e.g., the electronic device 102 or 104 of FIG. 1). For example, the voice signal 210 may be referred to as a sound signal, a signal, an utterance signal, a wake-up word signal, an external sound, or a user signal.

Referring to the example 200, the electronic device 101 may perform feature extraction 215 for the voice signal 210. For example, the electronic device 101 may extract a plurality of feature values for the voice signal 210. Although not illustrated in the example 200, the electronic device 101 may enhance a feature for the speech of the voice signal 210 before performing the feature extraction 215 for the voice signal 210. For example, the operation of enhancing the feature for the speech may include at least one of operations of removing noise from the voice signal 210, enhancing the speech portion of the voice signal 210, and normalizing volume of the speech portion. The electronic device 101 may obtain the plurality of feature values for the voice signal 210 after enhancing the feature for the speech. For example, the electronic device 101 may obtain the plurality of feature values based on a mel frequency cepstral coefficient (MFCC) conversion algorithm. The electronic device 101 may obtain a spectrum by applying a fast-Fourier transform (FFT) to each frame with respect to the voice signal 210. The electronic device 101 may obtain the spectrum for frequency domain by applying the FFT with respect to the voice signal 210. The electronic device 101 may obtain a mel spectrum by applying a mel filter bank to the spectrum. The electronic device 101 may obtain the mel spectrum based on a mel scale indicating a relationship between the frequency domain and a low frequency band recognized by a real person. The electronic device 101 may obtain MFCCs by applying a cepstral analysis to the mel spectrum. The MFCCs may be referred to as the feature values. For example, the electronic device 101 may obtain the feature values, which are a portion of total feature values, which are peaks obtained based on the cepstral analysis.

Referring to the example 200, the electronic device 101 may recognize a wake-up word from the voice signal 210, through a wake-up word recognition engine 220. For example, the electronic device 101 may recognize the wake-up word through the wake-up word recognition engine 220 based on the plurality of feature values. For example, the wake-up word recognition engine 220 may be implemented by hardware, software, or a combination of the hardware and the software for recognizing the wake-up word. For example, the electronic device 101 may identify the wake-up word included in the voice signal 210 using the wake-up word recognition engine 220 and a wake-up word recognition model 223. For example, the wake-up word recognition model 223 may include a statistical model trained to identify (or recognize) the wake-up word. For example, the statistical model may include an artificial neural network model, a hidden Markov model (HMM), a Gaussian mixture model (GMM), a support vector machine (SVM), and a vector quantizer (VQ). For example, the electronic device 101 may implement the wake-up word recognition engine 220 and a speaker recognition engine 225 as a recognition algorithm (e.g., a speaker dependent voice recognition). The electronic device 101 may perform the speaker dependent voice recognition that does not distinguish between wake-up word recognition and speaker recognition by using a speaker dependent voice recognition model. For example, based on the speaker dependent voice recognition, the electronic device 101 may obtain wake-up word recognition information (e.g., a first recognition result below) and speaker recognition information (e.g., a second recognition result below). For example, the wake-up word may include a designated word or sentence used to indicate a specific electronic device. The wake-up word may be used to execute a voice recognition function of the indicated specific electronic device. For example, the electronic device 101 may recognize that the user is calling (or invoking, indicating) the electronic device 101 based on identifying that the wake-up word is included in the voice signal 210. For example, the wake-up word may be preset by the electronic device 101 or set by the user. For example, the electronic device 101 may generate (or obtain) a recognition result for the wake-up word in the voice signal 210 based on the wake-up word recognition engine 220 and the wake-up word recognition model 223. Hereinafter, the recognition result for the wake-up word may be referred to as a first recognition result, a wake-up word recognition result, wake-up word recognition information, or wake-up word information. The first recognition result may be defined as illustrated in the following table.

**[Table 1]**

| |
|---|
| { |
| "Device Info" : |
| { |
| "Device Name" : "QCQ70", |
| "Device Type" : "TV", |
| "Device ID" : "9872206", |
| "Wake-up Word" : "Hi Bixby", |
| "IP Address": "***.***.50.55" |
| }, |
| "Recognition Result" : |
| { |
| "Recognition Score" : "0.913", |
| "Speech Power" : "54.35", |
| "SNR" : "3.47", |
| "Time" : "2023-05-02 15:33:55,96" |
| } |
| } |

Referring to the above-described table, the first recognition result may include a recognition score, a speech power (or a loudness, or a sound pressure level), a signal-to-noise ratio (SNR), and a time. However, an embodiment of the present disclosure is not limited thereto. For example, the first recognition result may also include only the speech power. Alternatively, for example, the first recognition result may also include information on a priority between electronic devices in addition to information exemplified in the table. For example, the priority may indicate a priority responding to the wake-up word. For example, the priority may be set by a user of an electronic device.

For example, the recognition score may indicate recognition information on the wake-up word. For example, the electronic device 101 may obtain the recognition score, which indicates a degree of recognition for the wake-up word of the voice signal 210 as a probability value. For example, the electronic device 101 may obtain the recognition score based on the wake-up word recognition engine 220. The recognition score may be referred to as reliability (or recognition reliability) of the wake-up word or a recognition accuracy value.

For example, the speech power may indicate a sound power level of the voice signal 210. For example, the electronic device 101 may identify a level of the voice signal 210. The speech power or the sound power level may be used to identify (or recognize) an electronic device positioned closest to a user who uttered the voice signal 210. For example, the speech power may be referred to as a speech power, a sound power, or a sound power level.

For example, the SNR may indicate a ratio between a signal (e.g., the speech) in the voice signal 210 and the noise. For example, the electronic device 101 may identify a degree of noise of an environment (or a space) in which the voice signal 210 was uttered based on the SNR. For example, the time may indicate a timing at which the voice signal 210 is obtained.

For example, the electronic device 101 may generate device information associated with the first recognition result. The device information may include information on the electronic device 101 that has obtained the first recognition result. For example, the device information may include a device name, a device type, a device identity (a device ID), a wake-up word, and an internet protocol (IP) address of a device. For example, the device name may include a model name of the electronic device 101. For example, the device type may include a type (e.g., a TV) of the electronic device 101. For example, the device identity may include a unique identification number of the electronic device 101. For example, the wake-up word may include a name of a wake-up word set for the electronic device 101. The content of the above-described table is merely an example for convenience of description, and an embodiment of the present disclosure is not limited thereto. For example, the device information may be transmitted or received (i.e., shared) together with the first recognition result.

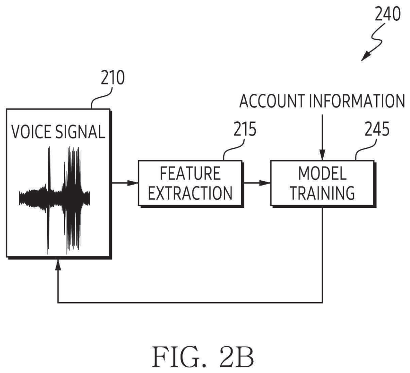

Referring to the example 200, the electronic device 101 may recognize the speaker (or user) who uttered the voice signal 210 from the voice signal 210, through the speaker recognition engine 225. For example, the speaker recognition engine 225 may be implemented by hardware, software, or a combination of the hardware and the software for recognizing the speaker. For example, the electronic device 101 may identify the speaker using the speaker recognition engine 225 and a speaker recognition model 228. For example, the speaker recognition model 228 may include a statistical model trained to identify (or recognize) the speaker. For example, the statistical model may include an artificial intelligence model (an AI model) or an artificial neural network model. For example, the speaker may indicate a user registered with respect to the electronic device 101. For example, the electronic device 101 may register the speaker based on a plurality of voice signals uttered by the speaker. The registration may indicate that the electronic device 101 includes storing information on the speaker in the electronic device 101. Specific content in association with this is described in FIG. 2B below. For example, the electronic device 101 may generate (or obtain) a recognition result for the speaker. Hereinafter, the recognition result for the speaker may be referred to as a second recognition result. For example, the second recognition result may be referred to as a speaker recognition result, speaker recognition information, or speaker information.

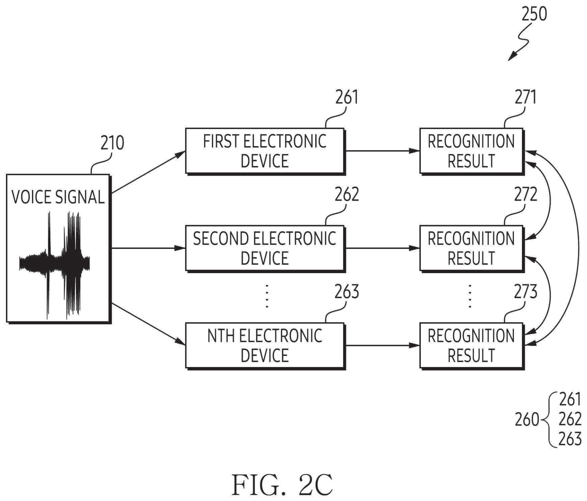

Referring to the example 200, the electronic device 101 may generate a recognition result 230. The recognition result 230 may include the first recognition result and the second recognition result. However, an embodiment of the present disclosure is not limited thereto. For example, in a case that the electronic device 101 does not include the speaker recognition engine 225, the recognition result 230 may include only the first recognition result. For example, the electronic device 101 may implement the wake-up word recognition engine 220 and the speaker recognition engine 225 as a recognition algorithm (e.g., a speaker dependent voice recognition). In a case of the electronic device 101 using the speaker dependent voice recognition, the first recognition result may include speaker recognition information (i.e., the second recognition result). In FIG. 2A, the example 200 in which the electronic device 101 generates (or obtains) the recognition result 230 is illustrated, but an embodiment of the present disclosure is not limited thereto. For example, the electronic device 101 may share the generated recognition result 230 to one or more external electronic devices. For example, the sharing may include transmitting (or broadcasting) information on the recognition result 230 to the one or more external electronic devices and receiving a recognition result of the one or more external electronic devices from the one or more external electronic devices. Specific content in association with this is described in FIG. 2C below.

FIG. 2B illustrates an example of a method of registering a speaker based on a voice signal.

FIG. 2B illustrates an example 240 of a method in which an electronic device 101 registers the speaker based on a voice signal 210. The electronic device 101 of FIG. 2B may indicate an example of the electronic device 101 of FIG. 1.

Referring to the example 240, the electronic device 101 may obtain the voice signal 210 and perform feature extraction 215 for the obtained voice signal 210. Specific content in association with this may be referenced substantially the same as the content of FIG. 2A. For example, the electronic device 101 may obtain a plurality of voice signals 210 including the same word or sentence from a user. For example, the same word or sentence may indicate a wake-up word. Referring to the example 240, the electronic device 101 may perform model training 245 based on a plurality of feature values obtained from the voice signal 210. For example, the model training 245 may include training of a statistical model (e.g., an artificial intelligence model) for registering the speaker with respect to the electronic device 101. For example, the electronic device 101 may register the speaker corresponding to account information by performing the model training 245 on the account information based on the plurality of feature values. For example, the account information may include information for identifying the speaker.

Referring to the example 240, the electronic device 101 may register the speaker by performing the model training 245 using a designated number of voice signals including the voice signal 210. The speaker being registered may indicate that the electronic device 101 that has obtained the voice signal 210 uttered by the speaker may recognize the speaker based on the voice signal 210. In the example 240, an example in which the model training 245 is performed based on the designated number of the voice signals is described, but an embodiment of the present disclosure is not limited thereto. For example, the electronic device 101 may also perform the model training 245 based on a voice signal of a designated time length.

FIG. 2C illustrates an example of a method in which a plurality of electronic devices obtain a voice signal and share a recognition result of the obtained voice signal.

FIG. 2C illustrates an example 250 of a method in which each of a plurality of electronic devices 260 obtains a voice signal 210 and shares a recognition result for the obtained voice signal 210. An electronic device 101 of FIG. 2C may indicate an example of the electronic device 101 of FIG. 1.

Referring to the example 250, each of the plurality of electronic devices 260 may obtain the voice signal 210. For example, the plurality of electronic devices 260 may include a first electronic device 261, a second electronic device 262, and an Nth electronic device 263. For example, the first electronic device 261 may indicate an example of the electronic device 101 of FIG. 1. The plurality of electronic devices 260 may indicate electronic devices positioned in the same space. For example, the same space may be defined based on a distance that is connected to the same access point (AP) or connectable based on short-range communication (e.g., Bluetooth or Wi-Fi). For example, the plurality of electronic devices 260 may include electronic devices connected to the same AP or electronic devices that are connectable based on the short-range communication. The same wake-up word may be set (or used) in the plurality of electronic devices 260. For example, the wake-up word may indicate a wake-up word included in the voice signal 210.

Referring to the example 250, the plurality of electronic devices 260 may share a recognition result with respect to the voice signal 210. For example, the recognition result may include the first recognition result. Alternatively, for example, the recognition result may include the first recognition result and the second recognition result. Referring to the example 250, the first electronic device 261 may obtain the voice signal 210 uttered by a speaker (or a user) and generate a recognition result 271 based on the obtained voice signal 210. The first electronic device 261 may transmit (or broadcast) the recognition result 271 to the second electronic device 262 and the Nth electronic device 263. The second electronic device 262 and the Nth electronic device 263 may receive (or obtain) the recognition result 271. In addition, referring to the example 250, the second electronic device 262 may obtain the voice signal 210 uttered by the speaker (or the user) and generate a recognition result 272 based on the obtained voice signal 210. The second electronic device 262 may transmit (or broadcast) the recognition result 272 to the first electronic device 261 and the Nth electronic device 263. The first electronic device 261 and the Nth electronic device 263 may receive (or obtain) the recognition result 272. In addition, referring to the example 250, the Nth electronic device 263 may obtain the voice signal 210 uttered by the speaker (or the user) and generate a recognition result 273 based on the obtained voice signal 210. The Nth electronic device 263 may transmit (or broadcast) the recognition result 273 to the first electronic device 261 and the second electronic device 262. The first electronic device 261 and the second electronic device 262 may receive (or obtain) the recognition result 273.

For example, each of the plurality of electronic devices 260 may identify an electronic device indicated by the voice signal 210 based on the obtained recognition results. For example, each of the plurality of electronic devices 260 may identify an electronic device with the highest speech power level of the voice signal 210 as the electronic device indicated by the voice signal 210 based on the obtained recognition results. The speech power level may be compared through a value corrected (or processed) for the voice signal 210 obtained from each of the plurality of electronic devices 260. The electronic device indicated by the voice signal 210 may indicate an electronic device in which a speaker who uttered the voice signal 210 intends to execute a function.

Referring to FIGS. 2A to 2C, the electronic device 101 may obtain a voice signal, recognize a wake-up word and identify whether a speaker who uttered the voice signal 210 is a registered speaker based on processing of the obtained voice signal. However, in an example, in a case of the electronic device 101 that does not include a speaker recognition module (e.g., the speaker recognition engine 225 and the speaker recognition model 228 of FIG. 2A), or in which an acoustic model for registering a speaker has not been generated, it may be difficult for the electronic device 101 to identify whether a speaker who uttered the voice signal 210 is a registered speaker. Hereinafter, in an electronic device and a method according to embodiments of the present disclosure, some of the electronic devices may provide a speaker recognition-based service based on a recognition result (e.g., a second recognition result) of a speaker who uttered the wake-up word when a plurality of electronic devices using the same wake-up word exist in the same space (e.g., a range within which a wake-up word uttered by the user has an effect, and a range within which a device (e.g., the electronic device 101) is activated by a wake-up word uttered by the user). For example, the speaker recognition-based service may include execution of a designated function, such as an application executed for a specific speaker or a specific UI display. For example, the application executed for the specific speaker may include a software application in which an authentication of the speaker is required. However, an embodiment of the present disclosure is not limited thereto. For example, the speaker recognition-based service may include execution of at least one instruction stored in the electronic device 101, execution of any operation, or execution of a function set by the user. When the plurality of electronic devices using the same wake-up word exist in the same space, for example, the electronic device and the method according to embodiments of the present disclosure, by sharing speaker information (e.g., the second recognition result), recognized by an electronic device in which registration of a speaker who uttered the wake-up word among the plurality of electronic devices has been completed, with another electronic device other than the electronic device among the plurality of electronic devices, may provide the speaker recognition-based service through the other electronic device. The other electronic device may be an electronic device in which the registration of the speaker is not completed or does not include a speaker recognition module (e.g., a speaker recognition engine and an acoustic model).

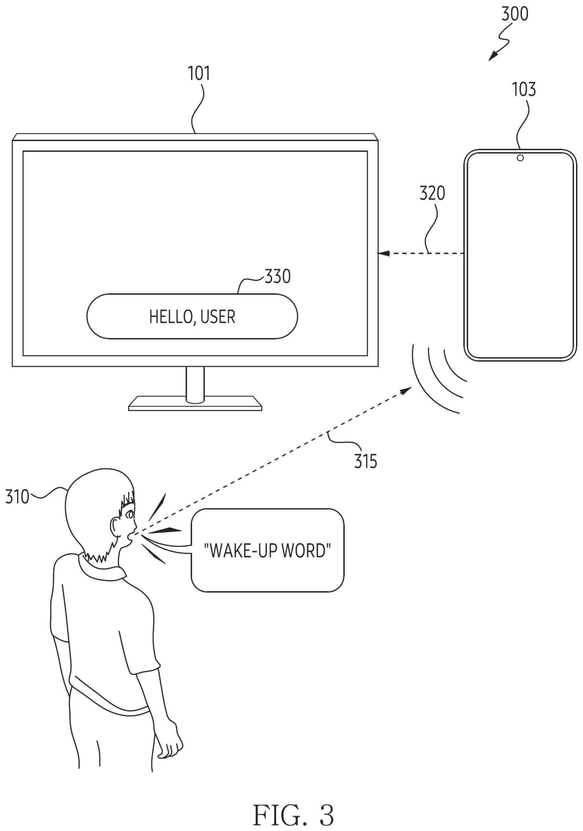

FIG. 3 illustrates an example of a method in which an electronic device recognizes a speaker using an external electronic device.

FIG. 3 illustrates an example 300 of a method in which an electronic device 101 recognizes a speaker 310 using an external electronic device 103. The electronic device 101 of FIG. 3 may indicate an example of the electronic device 101 of FIG. 1.

Referring to the example 300, the external electronic device 103 may obtain a voice signal 315 uttered by the speaker 310. For example, the external electronic device 103 may obtain the voice signal 315 including a "wake-up word". In the example 300, it is described as the "wake-up word", but an embodiment of the present disclosure is not limited thereto. For example, the "wake-up word" may include a designated word or sentence for the electronic device 101 and the external electronic device 103. In addition, for example, the voice signal 315 may include not only the wake-up word but also a command word. For example, the wake-up word may be used to execute a voice recognition function of the electronic device 101 or the external electronic device 103. For example, the command may be used to command a designated function according to the command in a state that the voice recognition function of the external electronic device 103 or the electronic device 101 is activated.

Referring to the example 300, the external electronic device 103 may recognize the wake-up word and the speaker 310 based on the voice signal 315. For example, the external electronic device 103 may generate a first recognition result for the wake-up word based on the voice signal 315. In addition, for example, the external electronic device 103 may generate a second recognition result for the speaker 310 based on the voice signal 315. In this case, the external electronic device 103 may indicate an electronic device in which the speaker 310 is registered (i.e., in which a speaker recognition model is generated and information on the speaker 310 is stored). The external electronic device 103 may transmit a recognition result 320 including the first recognition result and the second recognition result to the electronic device 101. In the example 300 of FIG. 3, an example in which the external electronic device 103 transmits the recognition result 320 to the electronic device 101 is illustrated, but an embodiment of the present disclosure is not limited thereto. For example, the electronic device 101 may obtain the voice signal 315 uttered by the speaker 310 and generate a recognition result based on the obtained voice signal 315. The electronic device 101 may transmit the recognition result to the external electronic device 103. Accordingly, the external electronic device 103 may receive the recognition result. In other words, in the example 300 of FIG. 3, the external electronic device 103 and the electronic device 101 may share the recognition result. In this case, the recognition result transmitted by the electronic device 101 may include only the first recognition result for the wake-up word. This may be because the electronic device 101 does not include a speaker recognition module, or is an electronic device to which the speaker is not registered.

According to an embodiment, the external electronic device 103 may identify whether an electronic device, which is a target called by the speaker 310, is the external electronic device 103 based on the recognition result 320. The target may be referred to as an indication target. For example, the external electronic device 103 may identify whether the electronic device that the speaker 310 intends to recognize through the wake-up word is the external electronic device 103 based on the first recognition result of the recognition result 320. In this case, the external electronic device 103 may identify whether the target is the external electronic device 103 based on the recognition result received from the electronic device 101 together with the first recognition result of the recognition result 320. In the example 300 of FIG. 3, it is assumed that a target called by the speaker 310 is the electronic device 101. Accordingly, the external electronic device 103 may identify that the target is not the external electronic device 103 based on the first recognition result of the recognition result 320 and the recognition result received from the electronic device 101.

According to an embodiment, the electronic device 101 may identify whether the target is the electronic device 101 based on the first recognition result of the recognition result 320 and the recognition result generated by the electronic device 101. For example, the electronic device 101 may identify an electronic device with the maximum speech power level based on the first recognition result received from the external electronic device 103 and the recognition result identified by the electronic device 101. In the example 300 of FIG. 3, the electronic device with the maximum speech power level may be the electronic device 101.

According to an embodiment, the electronic device 101 may identify whether the recognition result 320 includes the second recognition result. For example, in a case that the recognition result 320 includes the second recognition result, the electronic device 101 may provide a speaker recognition service. According to an embodiment, the electronic device 101 may execute a designated function. For example, the designated function may be included in the speaker recognition service. For example, the electronic device 101 may display a user interface (UI) 330 as the designated function. For example, the UI 330 may include a visual object indicating a sentence "Hello, user". The user may refer to the speaker 310.

Referring to the example 300, the electronic device 101 may provide the speaker recognition service based on speaker information received from the external electronic device 103 even though the electronic device 101 does not include a speaker recognition module (or a speaker recognition model) for recognizing the speaker 310, or is an electronic device in which information on the speaker 310 is not registered. Referring to the above-description, the speaker recognition service may be provided not only in a device used only by a specific user, but also in the electronic device 101, which is a device available to a plurality of users. For example, the device available to the plurality of users may be referred to as a public device or a shared device. For example, the device used only by the specific user may be referred to as a personal device. However, an embodiment of the present disclosure is not limited thereto. For example, even though the device is used only by the specific user, and in a case of registering another user and providing a speaker recognition service for the other user, the embodiment of the present disclosure may be applied.

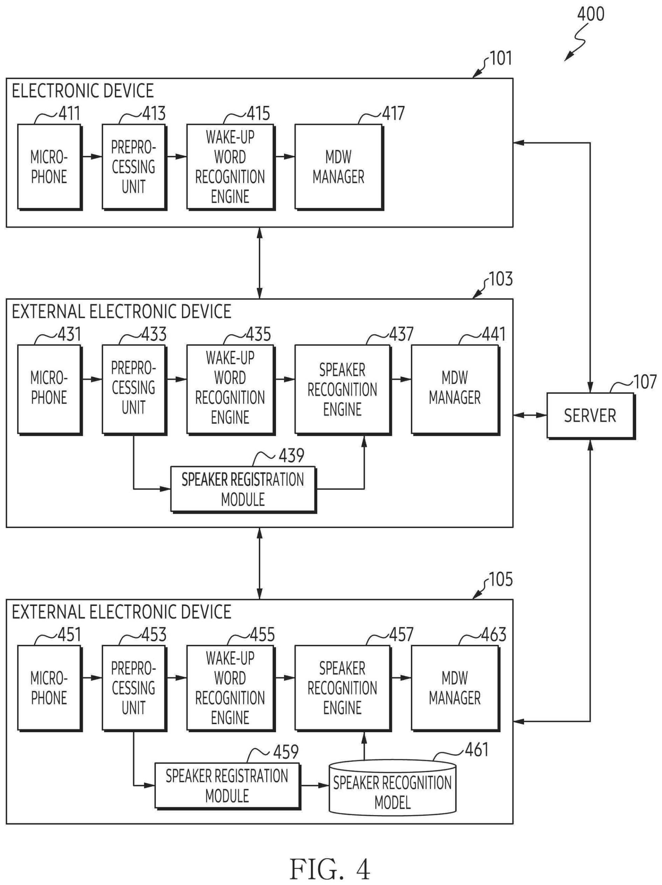

FIG. 4 illustrates an example of a multiple device wake-up (MDW) environment including an electronic device and one or more external electronic devices.

FIG. 4 illustrates an example of an MDW environment 400 including an electronic device 101, an external electronic device 103, and an external electronic device 105. For example, the MDW environment 400 may indicate a case that a device in which the same wake-up word is set (or used) is a plurality of electronic devices. For example, the plurality of electronic devices may recognize the wake-up word. For example, the plurality of electronic devices may include the electronic device 101, the external electronic device 103, and the external electronic device 105. The MDW environment 400 of FIG. 4 is merely an example for convenience of description, and an embodiment of the present disclosure is not limited thereto. For example, the MDW environment 400 may include a larger number of electronic devices or may also include only two electronic devices.

Referring to FIG. 4, according to an embodiment, the MDW environment 400 may include the electronic device 101, the external electronic device 103, the external electronic device 105, and a server 107. For example, the electronic device 101 may indicate an example of a device that does not include a speaker recognition module. For example, the external electronic device 103 may indicate an example of a device that includes the speaker recognition module and in which registration of a speaker is completed. For example, the external electronic device 105 may indicate an example of a device that includes the speaker recognition module, but in which registration of the speaker is not completed. The device in which registration of the speaker is completed may indicate a device in which a speaker recognition model for the speaker is generated. For example, the server 107 may indicate an example of an external electronic device connected to the electronic device 101, the external electronic device 103, and the external electronic device 105 and managing the electronic device 101, the external electronic device 103, and the external electronic device 105. For example, the server 107 may collect a recognition result received from each of the electronic device 101, the external electronic device 103, and the external electronic device 105, and provide information on the recognition result to a specific electronic device, which is an indication target, based on the collected recognition results. In the example, an example in which the server 107 provides the information to the specific electronic device, which is the indication target, is described, but an embodiment of the present disclosure is not limited thereto. For example, the server 107 may also provide information on the recognition result to all electronic devices connected to the server 107. According to an embodiment, the information on the recognition result provided by the server 107 may include at least one of a first recognition result for a wake-up word and a second recognition result for a speaker received from each of the electronic devices connected to the server 107. For example, the server 107 may obtain the first recognition result received from the electronic device 101, the first recognition result and the second recognition result received from the external electronic device 103, and the first recognition result received from the external electronic device 105 and may provide the information including the obtained recognition results.

According to an embodiment, the electronic device 101 may include a microphone 411, a preprocessing unit 413, a wake-up word recognition engine 415, and an MDW manager 417. Although not illustrated in FIG. 4, the electronic device 101 may include at least one processor and at least one communication circuitry. For example, the at least one processor may control the at least one communication circuitry, the microphone 411, the preprocessing unit 413, the wake-up word recognition engine 415, and the MDW manager 417. For example, the at least one communication circuitry may be used for the electronic device 101 to perform communication with the external electronic devices 103 and 105 and the server 107. However, an embodiment of the present disclosure is not limited thereto. For example, the electronic device 101 may alsofurther include other components other than the microphone 411, the preprocessing unit 413, the wake-up word recognition engine 415, the MDW manager 417, the at least one processor, and the at least one communication circuitry.

The at least one processor of the electronic device 101 according to an embodiment may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing (DSP), and/or a neural processing unit (NPU). The at least one processor may include at least a portion of the processor 120 of FIG. 1.

For example, the at least one processor of the electronic device 101 may include various processing circuitry and/or a plurality of processors. For example, a term "processor" used in the present document, including claims, may include various processing circuitry including at least one processor, and one or more of the at least one processor may be configured to perform various functions described below individually and/or collectively in a distributed method. As used below, in a case that "processor", "at least one processor", and "one or more processors" are described as being configured to perform various functions, these terms are not limited to an example and encompass situations in which one processor performs a portion of the cited functions and other processor(s) perform another portion of the cited functions, and/or situations in which one processor may perform all of the cited functions. Additionally, the at least one processor may include a combination of processors that perform various functions listed/disclosed, for example, in a distributed method. The at least one processor may execute program instructions to achieve or perform various functions.

For example, the electronic device 101 may obtain a voice signal from the outside via the microphone 411. For example, the voice signal may include a wake-up word. Alternatively, for example, the voice signal may include the wake-up word and a command word. The wake-up word may include a designated word or sentence registered in the electronic device 101.

For example, the electronic device 101 may perform processing of the voice signal through the preprocessing unit 413. For example, the electronic device 101 may extract a plurality of feature values for the voice signal through the preprocessing unit 413, and enhance a feature of a voice portion of the voice signal. Specific content in association with this may be applied substantially the same as the content of FIG. 2A.

For example, the electronic device 101 may identify (or recognize) a wake-up word included in the voice signal based on the wake-up word recognition engine 415. For example, the electronic device 101 may generate a first recognition result for the wake-up word identified based on the wake-up word recognition engine 415.

For example, the electronic device 101 may share the first recognition result through the MDW manager 417. For example, the electronic device 101 may identify the external electronic devices 103 and 105 in the MDW environment 400 through the MDW manager 417. For example, the electronic device 101 may transmit (or provide) the first recognition result to the external electronic devices 103 and 105. In addition, for example, the electronic device 101 may receive (or obtain) a recognition result from each of the external electronic devices 103 and 105 through the MDW manager 417. Alternatively, for example, the electronic device 101 may transmit (or provide) the first recognition result to the server 107 in the MDW environment 400 through the MDW manager 417. In addition, for example, the electronic device 101 may receive (or obtain) information on the recognition results of the external electronic devices 103 and 105 from the server 107 in the MDW environment 400, through the MDW manager 417.

For example, the electronic device 101 may deactivate a voice service until a device, which is an indication target in the MDW environment 400, is determined through the MDW manager 417. Alternatively, for example, the electronic device 101 may deactivate the voice service in a case that another device (e.g., the external electronic device 103 or the external electronic device 105) in the MDW environment 400 is not determined as a device, which is an indication target, through the MDW manager 417. In other words, the electronic device 101 may control to wait without performing activation of the voice service before the indication target is determined. For example, in a case that the electronic device 101 in the MDW environment 400 is determined as the indication target through the MDW manager 417, the electronic device 101 may process a command word included in a subsequent inputted voice signal by activating the voice service.

Although not illustrated in FIG. 4, the electronic device 101 according to an embodiment may further include memory. The memory may include a hardware component for storing data and/or an instruction inputted to the at least one processor and/or outputted from the at least one processor. The memory may include, for example, a volatile memory such as a random-access memory (RAM), and/or a non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multimedia card (eMMC). The memory may include at least a portion of the memory 130 of FIG. 1.

Although not illustrated in FIG. 4, in the memory of the electronic device 101 according to an embodiment, one or more instructions (or command words) indicating a calculation and/or an operation to be performed on data by a processor 501 of the electronic device 101 may be stored. A set of one or more instructions may be referred to as a program, firmware, an operating system, a process, a routine, a sub-routine, and/or an application. In the following, an application being installed in the electronic device (e.g., the electronic device 101) may mean that one or more instructions provided in a form of the application are stored in the memory, and that the one or more applications are stored in an executable format (e.g., a file with an extension designated by an operating system of the electronic device 101) by the processor of the electronic device.

According to an embodiment, the external electronic device 103 may include a microphone 431, a preprocessing unit 433, a wake-up word recognition engine 435, a speaker recognition engine 437, a speaker registration module 439, and an MDW manager 441. Although not illustrated in FIG. 4, the external electronic device 103 may include memory, at least one processor, and at least one communication circuitry. For example, the at least one processor may control the at least one communication circuitry, the microphone 431, the preprocessing unit 433, the wake-up word recognition engine 435, the speaker recognition engine 437, the speaker registration module 439, and the MDW manager 441. For example, the at least one communication circuitry may be used for the external electronic device 103 to perform communication with the electronic device 101, the external electronic device 105, and the server 107. However, an embodiment of the present disclosure is not limited thereto. For example, the external electronic device 103 may further include other components other than the microphone 431, the preprocessing unit 433, the wake-up word recognition engine 435, the speaker recognition engine 437, the speaker registration module 439, the MDW manager 441, the at least one processor, and the at least one communication circuitry.

For example, the external electronic device 103 may obtain a voice signal from the outside via the microphone 431. For example, the voice signal may include a wake-up word. Alternatively, for example, the voice signal may include the wake-up word and a command word. The wake-up word may include a designated word or sentence registered in the external electronic device 103.

For example, the external electronic device 103 may perform processing of the voice signal through the preprocessing unit 433. For example, the external electronic device 103 may extract a plurality of feature values for the voice signal through the preprocessing unit 433, and enhance a feature of a voice portion of the voice signal. Specific content in association with this may be applied substantially the same as the content of FIG. 2A.

For example, the external electronic device 103 may identify a wake-up word included in the voice signal based on the wake-up word recognition engine 435. For example, the external electronic device 103 may generate a first recognition result for the wake-up word identified based on the wake-up word recognition engine 435. The first recognition result may be referred to in the example of the Table 1.

For example, the external electronic device 103 may recognize a speaker who uttered the voice signal based on the speaker recognition engine 437. Although FIG. 4 illustrates the external electronic device 103 including the speaker recognition engine 437, an embodiment of the present disclosure is not limited thereto. For example, the speaker recognition engine 437 may include a speaker recognition model trained on a specific speaker, such as a speaker recognition model 461 of the external electronic device 105. For example, the speaker may include a speaker registered based on the speaker registration module 439 included in the external electronic device 103. For example, the registered speaker may include at least one user. For example, the registered speaker may be registered in a state associated with account information. For example, the account information may be provided from an account manager (not illustrated) to the speaker registration module 439. For example, the account information may include an account identity (or ID) of the user. For example, the external electronic device 103 may identify whether the speaker who uttered the voice signal is the registered speaker. For example, the external electronic device 103 may generate (or obtain) a second recognition result for the speaker through the speaker recognition engine 437. The second recognition result may be defined as illustrated in the following table.

**[Table 2]**

| |
|---|
| { |
| "Device Info" : |
| { |
| "Device Name" : "QCQ70", |
| "Device Type" : "TV", |
| "Device ID" : "9872206", |
| "Wake-up Word" ; "Hi Bixby", |
| "IP Address": "***.***.50.55" |
| }, |
| "Recognition Result" : |
| { |
| "Recognition Score" : "0.913", |
| "Speech Power" : "54.35", |
| "SNR" : "3.47", |
| "Time" : "2023-05-02 15:33:55.96" |
| } |
| "Speaker Information" : |
| { |
| "Speaker Group" : "Family", |
| "Speaker ID" : "451415", |
| "Confidence Score" : "0.855" |
| } |
| } |

Referring to the above-described table, the second recognition result may include a speaker group, a speaker ID, and a confidence score. However, an embodiment of the present disclosure is not limited thereto. For example, the second recognition result may also include only the speaker ID. Alternatively, for example, the first recognition result may also include information on a priority between electronic devices in addition to information exemplified in the table.

For example, the speaker ID may indicate an identity for identifying the speaker who uttered the voice signal. For example, the speaker ID may be set to an encrypted value, or a designated value provided from the server 107. For example, the speaker ID may be referred to as a speaker account or speaker identification information. For example, the speaker group may indicate a group in which the speaker is included. For example, the speaker group may include a group (e.g., a family and friends) to which the speaker ID belongs.

For example, the confidence score may indicate recognition information on the speaker. For example, the external electronic device 103 may obtain the confidence score, which indicates a degree of recognition for the speaker of the voice signal as a probability value. For example, the external electronic device 103 may obtain the confidence score based on the speaker recognition engine 437. The confidence score may be referred to as reliability of the speaker.

Referring to the above-described table, the external electronic device 103 may generate the first recognition result and device information together with the second recognition result. For example, the first recognition result may include a recognition score, a speech power, a signal-to-noise ratio (SNR), and a time. For example, the device information may include information on the external electronic device 103 that has obtained the first recognition result. For example, the device information may include a device name, a device type, a device identity (a device ID), a wake-up word, and an internet protocol (IP) address of a device. Specific content in association with this may be referenced substantially the same as the content of the FIG. 2A.

For example, the external electronic device 103 may share the first recognition result and the second recognition result through the MDW manager 441. For example, the external electronic device 103 may identify the electronic device 101 and the external electronic device 105 in the MDW environment 400 through the MDW manager 441. For example, the external electronic device 103 may transmit (or provide) the first recognition result and the second recognition result to the electronic device 101 and the external electronic device 105. In addition, for example, the external electronic device 103 may receive (or obtain) a recognition result from each of the electronic device 101 and the external electronic device 105 through the MDW manager 441. Alternatively, for example, the external electronic device 103 may transmit (or provide) the first recognition result and the second recognition result to the server 107 in the MDW environment 400 through the MDW manager 441. In addition, for example, the external electronic device 103 may receive (or obtain) information on the recognition results of the electronic device 101 and the external electronic device 105 from the server 107 in the MDW environment 400, through the MDW manager 441.

According to an embodiment, the external electronic device 105 may include a microphone 451, a preprocessing unit 453, a wake-up word recognition engine 455, a speaker recognition engine 457, a speaker registration module 459, the speaker recognition model 461, and an MDW manager 463. Although not illustrated in FIG. 4, the external electronic device 105 may include memory, at least one processor, and at least one communication circuitry. For example, the at least one processor may control the at least one communication circuitry, the microphone 451, the preprocessing unit 453, the wake-up word recognition engine 455, the speaker recognition engine 457, the speaker registration module 459, the speaker recognition model 461, and the MDW manager 463. For example, the at least one communication circuitry may be used for the external electronic device 105 to perform communication with the electronic device 101, the external electronic device 103, and the server 107. However, an embodiment of the present disclosure is not limited thereto. For example, the external electronic device 105 may also further include other components other than the microphone 451, the preprocessing unit 453, the wake-up word recognition engine 455, the speaker recognition engine 457, the speaker registration module 459, the speaker recognition model 461, the MDW manager 463, the at least one processor, and the at least one communication circuitry.

For example, the external electronic device 105 may obtain a voice signal from the outside via the microphone 451. For example, the voice signal may include a wake-up word. Alternatively, for example, the voice signal may include the wake-up word and a command word. The wake-up word may include a designated word or sentence registered in the external electronic device 105.

For example, the external electronic device 105 may perform processing of the voice signal through the preprocessing unit 453. For example, the external electronic device 105 may extract a plurality of feature values for the voice signal through the preprocessing unit 453, and enhance a feature of a voice portion of the voice signal. Specific content in association with this may be applied substantially the same as the content of FIG. 2A.

For example, the external electronic device 105 may identify a wake-up word included in the voice signal based on the wake-up word recognition engine 455. For example, the external electronic device 105 may generate a first recognition result for the wake-up word identified based on the wake-up word recognition engine 455.

For example, the external electronic device 105 may identify whether the speaker recognition model 461 has been generated. For example, the external electronic device 105 may identify whether the speaker recognition model 461 has been generated through the speaker registration module 459. For example, the speaker recognition model 461 may be generated in association with account information. For example, the speaker recognition model 461 may be generated with respect to a specific user (or speaker).

For example, in a case that the external electronic device 105 identifies that the speaker recognition model 461 has been generated with respect to a speaker who uttered the voice signal, the external electronic device 105 may recognize the speaker who uttered the voice signal based on the speaker recognition engine 457 using the speaker recognition model 461. For example, the speaker may include a speaker registered based on the speaker registration module 459 included in the external electronic device 105. For example, the registered speaker may include at least one user. For example, the registered speaker may be registered in a state associated with account information. For example, the account information may be provided from an account manager (not illustrated) to the speaker registration module 459. For example, the account information may include an account identity (or ID) of the user. For example, the external electronic device 105 may identify whether the speaker who uttered the voice signal is the registered speaker. For example, the external electronic device 105 may generate (or obtain) a second recognition result for the speaker through the speaker recognition engine 457. The second recognition result may be applied to substantially the same as the content of the above-described Table 2.

Unlike the above description, for example, the external electronic device 105 may train the speaker recognition model 461 in a case of identifying that the speaker recognition model 461 with respect to the speaker who uttered the voice signal is not generated. For example, the external electronic device 105 may train the speaker recognition model 461 based on a recognition result obtained through the MDW manager 463. For example, the external electronic device 105 may generate the speaker recognition model 461 with respect to the speaker who uttered the voice signal by performing training of the speaker recognition model 461. The recognition result obtained through the MDW manager 463 may include speaker information (e.g., the second recognition result) identified by the external electronic device 103. The external electronic device 105 may identify the speaker who uttered the voice signal based on the speaker information. The external electronic device 105 may perform training of the speaker recognition model 461 with respect to the identified speaker based on the voice signal obtained by the external electronic device 105. In other words, the external electronic device 105 may use the second recognition result recognized by the external electronic device 103 to identify the speaker who uttered the voice signal, and may train the speaker recognition model 461 with respect to the speaker based on the voice signal directly obtained by the external electronic device 105. For example, the training may be performed based on a designated number of voice signals or a voice signal having a designated time length. In other words, the external electronic device 105 may identify that the speaker recognition model 461 has not been generated in a case of the speaker recognition model 461 trained through a smaller number of voice signals than the designated number of times of voice signals, or in a case of the speaker recognition model 461 trained through a voice signal shorter than the designated time length.

For example, the external electronic device 105 may share the first recognition result (or the first recognition result and the second recognition result) through the MDW manager 463. For example, the external electronic device 105 may identify the electronic device 101 and the external electronic device 103 in the MDW environment 400 through the MDW manager 463. For example, the external electronic device 105 may transmit (or provide) the first recognition result to the electronic device 101 and the external electronic device 103. Alternatively, in a case that the speaker recognition model 461 is generated, the external electronic device 105 may transmit (or provide) the first recognition result and the second recognition result to the electronic device 101 and the external electronic device 103 in the MDW environment 400 through the MDW manager 463. In addition, for example, the external electronic device 105 may receive (or obtain) a recognition result from each of the electronic device 101 and the external electronic device 103 through the MDW manager 463. Alternatively, for example, the external electronic device 105 may transmit (or provide) the first recognition result to the server 107 in the MDW environment 400 through the MDW manager 463. Alternatively, in a case that the speaker recognition model 461 is generated, the external electronic device 105 may transmit (or provide) the first recognition result and the second recognition result to the server 107 in the MDW environment 400 through the MDW manager 463. In addition, for example, the external electronic device 105 may receive (or obtain) information on the recognition results of the electronic device 101 and the external electronic device 103 from the server 107 in the MDW environment 400, through the MDW manager 463.

According to an embodiment, the server 107 may generate information on the recognition result based on the recognition result obtained from each of the electronic device 101, the external electronic device 103, and the external electronic device 105. For example, the server 107 may obtain the first recognition result generated by the electronic device 101 from the electronic device 101. In addition, for example, the server 107 may obtain the first recognition result and the second recognition result generated by the external electronic device 103 from the external electronic device 103. In addition, for example, the server 107 may obtain the first recognition result generated by the external electronic device 105 from the external electronic device 105. According to an embodiment, the server 107 may identify a target (i.e., an indication target) indicated by the voice signal based on the obtained recognition results. For example, the server 107 may identify a device, which is the indication target, by comparing sound power levels of the recognition results. For example, the server 107 may provide the information to the identified device (e.g., the electronic device 101). For example, the information may include at least a portion of the recognition results. However, an embodiment of the present disclosure is not limited thereto. According to an embodiment, the server 107 may also transmit the information including the recognition results to all of the electronic device 101, the external electronic device 103, and the external electronic device 105 connected to the server 107.

According to an embodiment, the server 107 may identify electronic devices included in the MDW environment 400 based on the recognition results, and may also share information on the identified devices to the electronic devices in the MDW environment 400.

According to an embodiment, in a case that the server 107 includes an MDW manager, the server 107 may identify the device, which is the indication target, based on the wake-up word recognition result received from each of the MDW managers 417, 441, and 463. Unlike the above description, in a case that the server 107 does not include the MDW manager, each of the MDW managers 417, 441, and 463 may identify the device, which is the indication target, based on the directly obtained wake-up word recognition result and the received wake-up word recognition result. For example, by comparing a size of the signal-to-noise ratio (SNR) included in the wake-up word recognition result, a device with the highest SNR may be identified as an indication target.

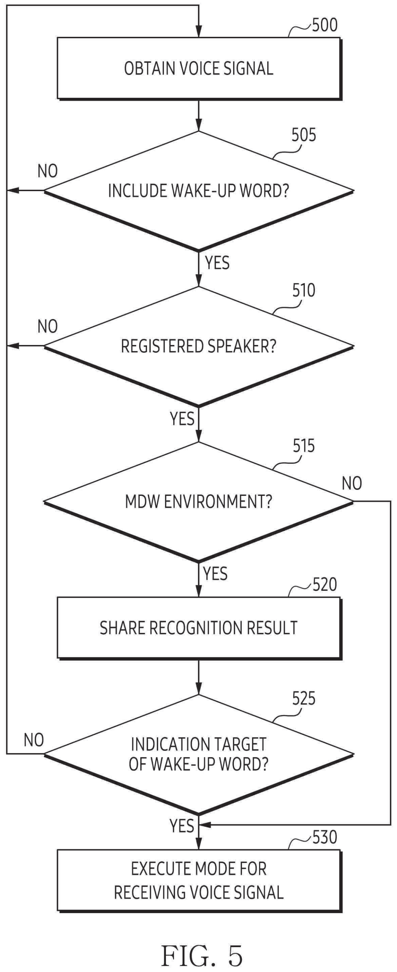

FIG. 5 illustrates an example of an operation flow of a method in which an electronic device including a speaker recognition model recognizes a wake-up word of a voice signal.

At least a portion of the method of FIG. 5 may be performed by the external electronic device 103 of FIG. 4. For example, the at least a portion of the method may be controlled by the at least one processor of the external electronic device 103. In the following embodiment, each of operations may also be sequentially performed, but is not necessarily performed sequentially. For example, an order of each of operations may also be changed, and at least two operations may also be performed in parallel.

In operation 500, the external electronic device 103 may obtain a voice signal. For example, the external electronic device 103 of FIG. 5 may indicate a device in which a speaker recognition model with respect to a speaker who uttered the voice signal is generated, as described in FIG. 4. For example, the external electronic device 103 may obtain the voice signal via a microphone 431.

In operation 505, the external electronic device 103 may identify whether the voice signal includes a wake-up word. For example, the external electronic device 103 may extract feature values of the voice signal and identify whether the voice signal includes the wake-up word based on the extracted feature values. For example, the wake-up word may indicate a wake-up word commonly set to the external electronic device 103 and devices in an MDW environment. For example, the MDW environment may include the external electronic device 103 and the electronic device 101. However, an embodiment of the present disclosure is not limited thereto. For example, the MDW environment may further include the external electronic device 103, the electronic device 101, and another external electronic device 105.

In the operation 505, in a case that the voice signal includes the wake-up word, the external electronic device 103 may perform operation 510. Unlike the above description, in the operation 505, in a case that the voice signal does not include the wake-up word, the external electronic device 103 may perform the operation 500 again.

In the operation 510, the external electronic device 103 may identify whether a speaker who uttered the voice signal is a registered speaker. For example, the external electronic device 103 may identify whether a speaker who uttered the voice signal is the registered speaker with respect to the external electronic device 103. For example, the external electronic device 103 may identify whether a speaker who uttered the voice signal is the registered speaker by comparing the feature values for the voice signal and information on the registered speaker.

In the operation 510, in a case that the speaker who uttered the voice signal is the registered speaker, the external electronic device 103 may perform operation 515. Unlike the above description, in the operation 510, in a case that the speaker who uttered the voice signal is not the registered speaker, the external electronic device 103 may perform the operation 500 again.

In operation 515, the external electronic device 103 may identify whether it is the MDW environment. For example, the external electronic device 103 may identify whether it is the MDW environment by identifying one or more connectable devices based on at least one communication circuitry included in the external electronic device 103. For example, the one or more connectable devices may indicate a device in which the wake-up word is set. Alternatively, for example, the external electronic device 103 may identify whether it is the MDW environment based on information obtained from a server (e.g., the server 107 of FIG. 4) for the MDW environment. For example, the information may include information on the one or more devices managed by the server. For example, the non-MDW environment may indicate a case that only the external electronic device 103 exists as a device capable of obtaining the voice signal, or a case that only the external electronic device 103 exists as a device to which the wake-up word is set. A case that the device capable of obtaining the voice signal is the external electronic device 103 may include a state in which no other devices exist nearby or a state that may not obtain a signal (e.g., a power-off state). Referring to the above-description, in a case that a plurality of devices including the external electronic device 103 to which the wake-up word is set, the MDW environment may include the plurality of devices to which the wake-up word is set and the server for the plurality of devices. For convenience of description, in the following example, the MDW environment including the server is described as an example, but an embodiment of the present disclosure is not to be construed as being limited thereto.

In the example of FIG. 5, the external electronic device 103 is described as performing the operation 515 after the operation 510, but an embodiment of the present disclosure is not limited thereto. According to an embodiment, the external electronic device 103 may repeatedly perform the operation 515 at every designated time point. For example, the external electronic device 103 may repeatedly identify whether it is the MDW environment at every above-designated time point. For example, the designated time point may be set periodically or aperiodically.

In the operation 515, in a case that the external electronic device 103 identifies that it is the MDW environment, the external electronic device 103 may perform operation 520. Unlike the above description, in the operation 515, in a case that the external electronic device 103 identifies that it is not the MDW environment, the external electronic device 103 may perform operation 530.

In the operation 520, the external electronic device 103 may share a recognition result. For example, the external electronic device 103 may generate a first recognition result and a second recognition result for the voice signal. For example, the first recognition result may indicate a recognition result for a wake-up word included in the voice signal. For example, the second recognition result may indicate a recognition result for a speaker who uttered the voice signal.

According to an embodiment, the external electronic device 103 may provide (or transmit) the recognition result to the server connected to the external electronic device 103. In addition, the external electronic device 103 may obtain (or receive) information on a recognition result of the one or more devices from the server. Alternatively, the external electronic device 103 may provide (or transmit) the recognition result to the identified one or more devices. In addition, the external electronic device 103 may obtain (or receive) a recognition result of the one or more devices from the one or more devices.

In operation 525, the external electronic device 103 may identify whether it is an indication target of the wake-up word. For example, the external electronic device 103 may identify whether the indication target of the wake-up word is the external electronic device 103. In other words, the external electronic device 103 may identify whether a device to respond (or execute a function) to the wake-up word is the external electronic device 103.

According to an embodiment, the external electronic device 103 may identify whether the indication target of the wake-up word is the external electronic device 103 based on the recognition result generated by the external electronic device 103 and the recognition result of the one or more devices shared through the operation 520. For example, the external electronic device 103 may identify the indication target based on a sound power level. For example, a device that identifies the maximum sound power level among sound power levels included in the recognition result generated by the external electronic device 103 and the recognition result of the one or more devices shared through the operation 520 may be identified as the indication target.

In the operation 525, the external electronic device 103 may perform operation 530 based on identifying that the indication target is the external electronic device 103. Unlike the above description, the external electronic device 103 may perform the operation 500 based on identifying that the indication target is not the external electronic device 103.

In the operation 530, the external electronic device 103 may execute a mode for receiving a voice signal. For example, the external electronic device 103 may execute the mode for waiting for the reception of the voice signal. For example, the mode may include a state in which the microphone (e.g., the microphone 431 of FIG. 4) included in the external electronic device 103 is activated. The voice signal received in the state in which the mode is executed may include a command word. For example, the voice signal including the command word may be expected to be received to the external electronic device 103 based on the external electronic device 103 performing processing of the voice signal including the wake-up word identified in the operation 505.

Although not illustrated in FIG. 5, the external electronic device 103 may also provide a speaker recognition service based on recognizing the voice signal, which is uttered by the registered speaker and includes the wake-up word. For example, the external electronic device 103 may execute a designated function. For example, the designated function may be included in the speaker recognition service. For example, as the designated function, the external electronic device 103 may include display of a designated user interface (UI) (e.g., the UI 330 of FIG. 3) or execution of an application allowed for a specific speaker (e.g., in a case that the voice signal includes the wake-up word and a command word for the execution of the application). For example, the application allowed for the specific speaker may include a software application that requires authentication of the speaker. However, an embodiment of the present disclosure is not limited thereto.

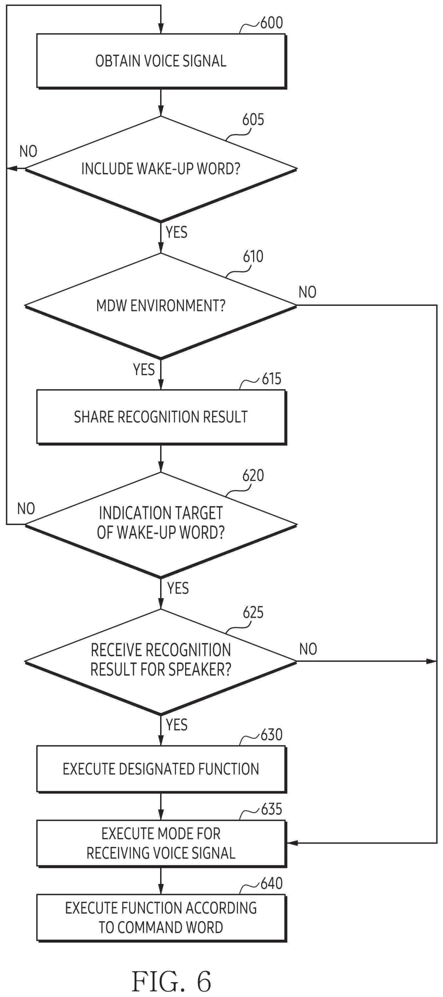

FIG. 6 illustrates an example of an operation flow of a method in which an electronic device that does not include a speaker recognition model recognizes a wake-up word of a voice signal.

At least a portion of the method of FIG. 6 may be performed by the electronic device 101 of FIG. 4. For example, the at least a portion of the method may be controlled by the at least one processor of the electronic device 101. However, an embodiment of the present disclosure is not limited thereto. The at least a portion of the method may be performed by the external electronic device 105 of FIG. 4. For example, the at least a portion of the method may be controlled by the at least one processor of the external electronic device 105. In the following embodiment, each of operations may alsobe sequentially performed, but are not necessarily performed sequentially. For example, an order of each of operations may also be changed, and at least two operations may also be performed in parallel. Hereinafter, the method performed by the electronic device 101 is described, but substantially the same may also be applied to the external electronic device 105.

In operation 600, the electronic device 101 may obtain a voice signal. For example, the electronic device 101 of FIG. 6 may indicate an electronic device that does not include a speaker recognition model for recognizing a speaker who uttered the voice signal, as described in FIG. 4. Alternatively, for example, the external electronic device 105 of FIG. 6 may indicate an electronic device which includes the speaker recognition model for recognizing the speaker who uttered the voice signal, as described in FIG. 4, but in which the speaker who uttered the voice signal is not registered. For example, the electronic device 101 may obtain the voice signal via a microphone 411.

In operation 605, the electronic device 101 may identify whether the voice signal includes a wake-up word. For example, the electronic device 101 may extract feature values of the voice signal and identify whether the voice signal includes the wake-up word based on the extracted feature values. For example, the wake-up word may indicate a wake-up word commonly set to the electronic device 101 and devices in an MDW environment. For example, the MDW environment may include the electronic device 101 and one or more external electronic devices (e.g., the external electronic device 103 of FIG. 4 or the external electronic device 105 of FIG. 4). However, an embodiment of the present disclosure is not limited thereto.

In the operation 605, in a case that the voice signal includes the wake-up word, the electronic device 101 may perform operation 610. Unlike the above description, in the operation 605, in a case that the voice signal does not include the wake-up word, the electronic device 101 may perform the operation 600 again.

In the operation 610, the electronic device 101 may identify whether it is the MDW environment. For example, the electronic device 101 may identify whether it is the MDW environment by identifying one or more connectable devices based on at least one communication circuitry included in the electronic device 101. For example, the one or more connectable devices may indicate a device in which the wake-up word is set. Alternatively, for example, the electronic device 101 may identify whether it is the MDW environment based on information obtained from a server (e.g., the server 107 of FIG. 4) for the MDW environment. For example, the information may include information on the one or more devices managed by the server. For example, the non-MDW environment may indicate a case that only the electronic device 101 exists as a device capable of obtaining the voice signal, or a case that only the electronic device 101 exists as a device to which the wake-up word is set. In a case that the device capable of obtaining the voice signal is the electronic device 101, it may include a state in which no other devices exist nearby or a state that may not obtain a signal (e.g., a power-off state).

In the example of FIG. 6, the electronic device 101 is described as performing the operation 610 after the operation 605, but an embodiment of the present disclosure is not limited thereto. According to an embodiment, the electronic device 101 may repeatedly perform the operation 610 at every designated time point. For example, the electronic device 101 may repeatedly identify whether it is the MDW environment at every above-designated time point. For example, the designated time point may be set periodically or aperiodically.

In the operation 610, in a case that the electronic device 101 identifies that it is the MDW environment, the electronic device 101 may perform operation 615. Unlike the above description, in the operation 610, in a case that the electronic device 101 identifies that it is not the MDW environment, the electronic device 101 may perform operation 635.

In the operation 615, the electronic device 101 may share a recognition result. For example, the electronic device 101 may generate a first recognition result for the voice signal. For example, the first recognition result may indicate a recognition result for a wake-up word included in the voice signal.

According to an embodiment, the electronic device 101 may provide (or transmit) the recognition result to the server connected to the electronic device 101. In addition, the electronic device 101 may obtain (or receive) information on a recognition result of the one or more devices from the server. The recognition result of the one or more devices may include a first recognition result for a wake-up word and/or a second recognition result for a speaker. For example, the second recognition result may indicate a recognition result for a speaker who uttered the voice signal. Alternatively, the electronic device 101 may provide (or transmit) the recognition result to the identified one or more devices. In addition, the electronic device 101 may obtain (or receive) a recognition result of the one or more devices from the one or more devices.

In operation 620, the electronic device 101 may identify whether it is an indication target of the wake-up word. For example, the electronic device 101 may identify whether the indication target of the wake-up word is the electronic device 101. In other words, the electronic device 101 may identify whether a device to respond (or execute a function) to the wake-up word is the electronic device 101.

According to an embodiment, the electronic device 101 may identify whether the indication target of the wake-up word is the electronic device 101 based on the recognition result generated by the electronic device 101 and the recognition result of the one or more devices shared through the operation 615. For example, the electronic device 101 may identify the indication target based on a sound power level. For example, a device that identifies the maximum sound power level among sound power levels included in the recognition result generated by the electronic device 101 and the recognition result of the one or more devices shared through the operation 615 may be identified as the indication target.

In the operation 620, the electronic device 101 may perform operation 625 based on identifying that the indication target is the electronic device 101. Unlike the above description, the electronic device 101 may perform the operation 600 based on identifying that the indication target is not the electronic device 101.

In the operation 625, the electronic device 101 may identify whether a recognition result for the speaker has been received. For example, the electronic device 101 may identify whether the recognition result of the one or more devices received during the sharing includes the second recognition result for the speaker. For example, in a case that the second recognition result is included, the electronic device 101 may identify that the recognition result for the speaker has been received. Unlike the above description, in a case that the second recognition result is not included, the electronic device 101 may identify that the recognition result for the speaker has not been received.

In the operation 625, in a case that the recognition result of the one or more devices includes the second recognition result, the electronic device 101 may perform operation 630. Unlike the above description, in the operation 625, the electronic device 101 may perform operation 635 in a case that the recognition result of the one or more devices does not include the second recognition result.

In the operation 630, the electronic device 101 may execute a designated function. For example, in a case of including the second recognition result, the electronic device 101 may identify a speaker who uttered the voice signal based on the second recognition result. For example, the electronic device 101 may execute the designated function in the electronic device 101 for the speaker who uttered the voice signal. For example, the designated function may be included in a speaker recognition service. For example, as the designated function, the electronic device 101 may include display of a designated user interface (UI) (e.g., the UI 330 of FIG. 3) or execution of an application allowed for a specific speaker (e.g., in a case that the voice signal includes the wake-up word and a command word for the execution of the application). For example, the application allowed for the specific speaker may include a software application that requires authentication of the speaker. However, an embodiment of the present disclosure is not limited thereto.

In the operation 635, the electronic device 101 may execute a mode for receiving a voice signal. For example, the electronic device 101 may execute the mode for waiting for the reception of the voice signal. For example, the mode may include a state in which the microphone (e.g., the microphone 411 of FIG. 4) included in the electronic device 101 is activated. The voice signal received in the state in which the mode is executed may include a command word. For example, the voice signal including the command word may be expected to be received to the electronic device 101 based on the electronic device 101 performing processing of the voice signal including the wake-up word identified in the operation 605.

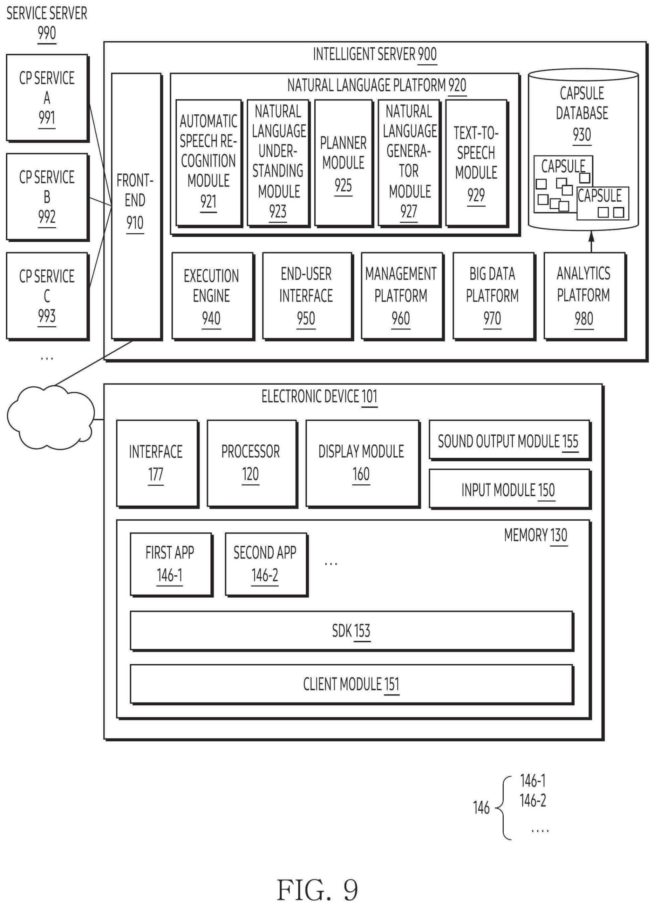

In operation 640, the electronic device 101 may execute a function according to the command word. For example, the electronic device 101 may receive the voice signal in a state in which the mode is executed. The electronic device 101 may recognize the command word included in the voice signal. The electronic device 101 may recognize the function according to the command word. For example, recognizing the function may be performed based on at least a portion of natural language processing (e.g., automatic speech recognition module (ASR module) 921, a natural language understanding module 923, a planner module 925, a natural language generator module 927, and a text to speech module 929) of a natural language platform 920 of FIG. 9 to be described later. For example, the function according to the command word may be associated with the speaker recognition service. For example, in a case that the voice signal is "tell me today's schedule.", the function may include recognizing and displaying a schedule of the user. Accordingly, the electronic device 101 may display the schedule of the user via a display.

According to an embodiment, the electronic device 101 may receive personal information on the user (or speaker) from an external electronic device based on recognition information (e.g., the second recognition result) on the user when executing the function according to the command word. For example, the personal information may include schedule information, a phone number, and multimedia content of the user. For example, the external electronic device may also be a device that is not included in the MDW environment 400.

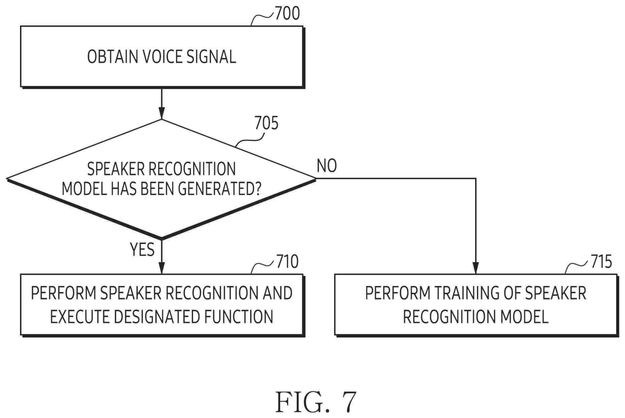

FIG. 7 illustrates an example of an operation flow of a method in which an electronic device generates a speaker recognition model.

At least a portion of the method of FIG. 7 may be performed by the external electronic device 105 of FIG. 4. For example, the at least a portion of the method may be controlled by the at least one processor of the external electronic device 105. However, an embodiment of the present disclosure is not limited thereto. For example, in the following embodiment, each of operations may also be sequentially performed, but are not necessarily performed sequentially. For example, an order of each of operations may also be changed, and at least two operations may also be performed in parallel.

In operation 700, the external electronic device 105 may obtain a voice signal. For example, the external electronic device 105 of FIG. 7 may indicate an electronic device which includes a speaker recognition model for recognizing a speaker who uttered the voice signal, as described in FIG. 4, but in which the speaker who uttered the voice signal is not registered. For example, the external electronic device 105 may obtain the voice signal via a microphone 451.

Although not illustrated in FIG. 7, according to an embodiment, the external electronic device 105 may identify whether the voice signal obtained in the operation 700 includes a wake-up word, identify whether it is an MDW environment, and share a recognition result, as described in FIG. 6. In addition, according to an embodiment, the external electronic device 105 may identify whether the recognition result received from one or more devices in the MDW environment includes a recognition result (e.g., a second recognition result) for the speaker who uttered the voice signal. Specific content in association with this may be referenced substantially the same as the operations of FIG. 6.

In operation 705, the external electronic device 105 may identify whether a speaker recognition model has been generated. For example, the external electronic device 105 may identify whether the speaker recognition model has been generated for the speaker who uttered the voice signal.

In the operation 705, in a case that the speaker recognition model is generated, the external electronic device 105 may perform operation 710. Unlike the above description, in the operation 705, in a case that the speaker recognition model is not generated, the external electronic device 105 may perform operation 715.

In the operation 710, the external electronic device 105 may perform speaker recognition and execute a designated function. For example, in a case that the speaker recognition model is generated, the external electronic device 105 may identify whether the speaker who uttered the voice signal is a speaker registered with the external electronic device 105. Specific content in association with this may be referenced substantially the same as the operation 510 of FIG. 5. The external electronic device 105 may execute the designated function based on recognizing that the speaker who uttered the voice signal is the registered speaker. For example, the designated function may be included in a speaker recognition service. For example, as the designated function, the external electronic device 105 may include display of a designated user interface (UI) (e.g., the UI 330 of FIG. 3) or execution of an application allowed for a specific speaker (e.g., in a case that the voice signal includes the wake-up word and a command word for the execution of the application). For example, the application allowed for the specific speaker may include a software application that requires authentication of the speaker. However, an embodiment of the present disclosure is not limited thereto.

In the operation 715, the external electronic device 105 may perform training of the speaker recognition model. For example, in a case that the speaker recognition model is not generated, the external electronic device 105 may perform the training to generate the speaker recognition model. For example, the external electronic device 105 may identify a speaker who uttered the voice signal based on the recognition result received from the one or more devices. For example, the external electronic device 105 may perform the training on the identified speaker based on the voice signal obtained by the external electronic device 105.

According to an embodiment, the speaker recognition model may be trained based on a speaker recognition algorithm. For example, the speaker recognition algorithm may include a Gaussian mixture model (GMM)/hidden Markov model (HMM)-based algorithm, a deep neural network (DNN)-based algorithm, or an identity vector (i-vector)-based algorithm.

According to an embodiment, in a case that the speaker recognition model is not generated, the external electronic device 105 may display a UI inquiring about whether to perform the training for generating the speaker recognition model. The external electronic device 105 may perform the training based on an input to the UI. According to an embodiment, the external electronic device 105 may store voice signals uttered by the speaker identified based on the recognition result received from the one or more devices. The voice signals may include a voice signal directly obtained by the external electronic device 105. For example, the external electronic device 105 may perform the training in a case that the voice signals uttered by the speaker are a designated number or more or a designated time length or longer. In a case that the training is completed based on the voice signals of the designated number or more or the designated time length or longer, the external electronic device 105 may display a UI notifying that the training is completed.

According to an embodiment, the voice signals used in the training may be a signal that satisfies a designated criterion. For example, the voice signals may include a signal having an SNR greater than or equal to a threshold SNR. However, an embodiment of the present disclosure is not limited thereto. The SNR may indicate an example of signal quality of a voice signal. Alternatively, for example, the voice signals may include a signal whose signal distance is within a reference distance from a voice signal stored at a previous timing, or a signal whose signal characteristic is less than or equal to a reference value. For example, the signal distance may include a spectral distance and a feature domain distance. The signal feature may include similarity and coherence.

According to an embodiment, in consideration of distortion that may be generated by a preprocessing process, the external electronic device 105 may process (e.g., an acoustic echo cancellation), perform noise suppression, or define operations such as beam forming, which amplifies a signal in a specific direction, based on a signal into which sound played by the external electronic device 105 flows via a microphone (e.g., the microphone 451) of the external electronic device 105 by generating sound from the external electronic device 105 itself. The voice signals may include a voice signal identified by an operation of each of the operations or a combination between the operations. According to an embodiment, each of the voice signals may include a wake-up word, the wake-up word and a command word, or the command word.

According to an embodiment, the external electronic device 105 may perform the training based on a speaker recognition engine (e.g., the speaker recognition engine 457 of FIG. 4) and a speaker registration module (e.g., the speaker registration module 459 of FIG. 4). In addition, the external electronic device 105 may include a wake-up word recognition engine (e.g., the wake-up word recognition engine 455 of FIG. 4) different from the speaker recognition engine. According to an embodiment, the speaker recognition engine and the wake-up word recognition engine may be implemented as a recognition engine. For example, the recognition engine may be referred to as a speaker dependent speech recognition engine. In this case, the voice signals used in the training may be a voice signal including a wake-up word. According to an embodiment, the external electronic device 105 may use the trained speaker recognition model, using the speaker dependent speech recognition engine, as an acoustic model for recognizing the wake-up word. In this case, the acoustic model for recognizing the wake-up word may be used based on an input of the user to a designated UI displayed through the external electronic device 105.

According to an embodiment, the training may not be recognized by the user of the external electronic device 105. For example, the training may be performed automatically in a background and repeatedly performed by the designated number or the designated time length.

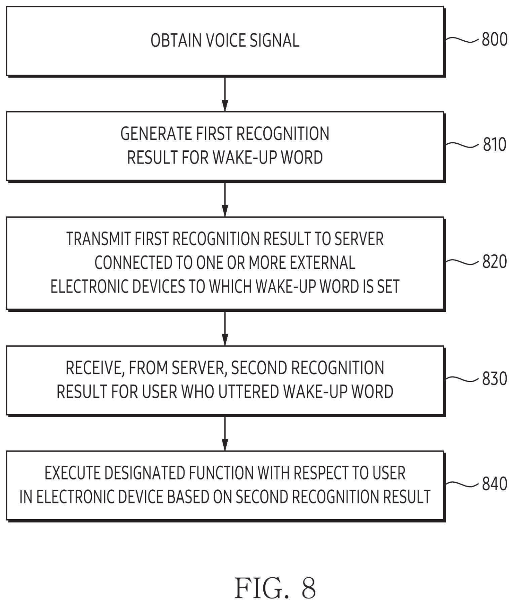

FIG. 8 illustrates an example of an operation flow of a method in which an electronic device recognizes a speaker using an external electronic device.

At least a portion of the method of FIG. 8 may be performed by the electronic device 101 of FIG. 4. For example, the at least a portion of the method may be controlled by the at least one processor of the electronic device 101. However, an embodiment of the present disclosure is not limited thereto. At least a portion of the method may be performed by the external electronic device 105 of FIG. 4. For example, the at least a portion of the method may be controlled by the at least one processor of the external electronic device 105. In the following embodiment, each of operations may alsobe sequentially performed, but are not necessarily performed sequentially. For example, an order of each of operations may also be changed, and at least two operations may also be performed in parallel. Hereinafter, the method performed by the electronic device 101 is described, but substantially the same may also be applied to the external electronic device 105.

In operation 800, the electronic device 101 may obtain a voice signal. For example, the electronic device 101 of FIG. 8 may indicate an electronic device that does not include a speaker recognition model for recognizing a speaker who uttered the voice signal, as described in FIG. 4. Alternatively, for example, the external electronic device 105 of FIG. 8 may indicate an electronic device which includes a speaker recognition model for recognizing a speaker who uttered the voice signal, as described in FIG. 4, but in which the speaker who uttered the voice signal is not registered. For example, the electronic device 101 may obtain the voice signal via a microphone 411.

In operation 810, the electronic device 101 may generate a first recognition result for a wake-up word. According to an embodiment, the electronic device 101 may identify whether the voice signal includes a wake-up word. For example, the electronic device 101 may extract feature values of the voice signal and identify whether the voice signal includes the wake-up word based on the extracted feature values. For example, the wake-up word may indicate a wake-up word commonly set to the electronic device 101 and devices in an MDW environment. For example, the MDW environment may include the electronic device 101 and one or more external electronic devices (e.g., the external electronic device 103 of FIG. 4 or the external electronic device 105 of FIG. 4). However, an embodiment of the present disclosure is not limited thereto.

According to an embodiment, the electronic device 101 may generate the first recognition result for the wake-up word included in the voice signal. For example, the first recognition result may include a recognition score, a speech power, a signal-to-noise ratio (SNR), and a time. However, an embodiment of the present disclosure is not limited thereto. For example, the first recognition result may also include only the speech power. Alternatively, for example, the first recognition result may also include information on a priority between electronic devices in addition to information exemplified in the table. For example, the priority may indicate a priority responding to the wake-up word. For example, the priority may be set by a user of an electronic device.

For example, the recognition score may indicate recognition information on the wake-up word. For example, the electronic device 101 may obtain the recognition score, which indicates a degree of recognition for the wake-up word of the voice signal as a probability value. For example, the electronic device 101 may obtain the recognition score. The recognition score may be referred to as reliability (or recognition reliability) of the wake-up word.

For example, the speech power may indicate a sound power level of the voice signal. For example, the electronic device 101 may identify a level of the voice signal. The speech power or the sound power level may be used to identify (or recognize) an electronic device positioned closest to a user who uttered the voice signal. For example, the speech power may be referred to as a speech power, a sound power, or a sound power level.

For example, the SNR may indicate a ratio between a signal (e.g., the speech) in the voice signal and the noise. For example, the electronic device 101 may identify a degree of noise of an environment (or a space) in which the voice signal was uttered based on the SNR. For example, the time may indicate a timing at which the voice signal is obtained.

For example, the electronic device 101 may generate device information associated with the first recognition result. The device information may include information on the electronic device 101 that has obtained the first recognition result. For example, the device information may include a device name, a device type, a device identity (a device ID), a wake-up word, and an internet protocol (IP) address of a device. For example, the device name may include a model name of the electronic device 101. For example, the device type may include a type (e.g., a TV) of the electronic device 101. For example, the device identity may include a unique identification number of the electronic device 101. For example, the wake-up word may include a name of a wake-up word set for the electronic device 101. The content of the above-described table is merely an example for convenience of description, and an embodiment of the present disclosure is not limited thereto. For example, the device information may be transmitted or received (i.e., shared) together with the first recognition result.

In operation 820, the electronic device 101 may transmit the first recognition result to a server connected to one or more external electronic devices to which the wake-up word is set.

For example, the electronic device 101 may identify whether it is the MDW environment. For example, the electronic device 101 may identify the one or more connectable external electronic devices based on at least one communication circuitry of the electronic device 101. For example, the electronic device 101 may identify whether it is the MDW environment based on identifying the one or more external electronic devices. For example, the one or more connectable external electronic devices may indicate a device to which the wake-up word is set. Alternatively, for example, the electronic device 101 may identify whether it is the MDW environment based on information obtained from a server (e.g., the server 107 of FIG. 4) for the MDW environment. For example, the information may include information on the one or more external electronic devices managed by the server. According to an embodiment, the electronic device 101 may provide (or transmit) the first recognition result to the server connected to the electronic device 101.

For example, the non-MDW environment may indicate a case that only the electronic device 101 exists as a device capable of obtaining the voice signal, or a case that only the electronic device 101 exists as a device to which the wake-up word is set. In a case that the device capable of obtaining the voice signal is the electronic device 101, it may include a state in which no other devices exist nearby or a state that may not obtain a signal (e.g., a power-off state).

In operation 830, the electronic device 101 may receive, from the server, a second recognition result for the user who uttered the wake-up word. The user may be referred to as a speaker who uttered the wake-up word. For example, the electronic device 101 may obtain (or receive) information on the second recognition result of the one or more external electronic devices from the server. However, an embodiment of the present disclosure is not limited thereto. For example, the electronic device 101 may include, from the server, a first recognition result for a wake-up word and/or a second recognition result for a speaker.

In operation 840, the electronic device 101 may execute a designated function in the electronic device 101 with respect to the user based on the second recognition result. For example, the electronic device 101 may identify the user based on the second recognition result. For example, the electronic device 101 may execute the designated function for the user. For example, the designated function may be included in a speaker recognition service. For example, as the designated function, the external electronic device 105 may include display of a designated user interface (UI) (e.g., the UI 330 of FIG. 3) or execution of an application allowed for a specific speaker (e.g., in a case that the voice signal includes the wake-up word and a command word for the execution of the application). For example, the application allowed for the specific speaker may include a software application that requires authentication of the speaker. However, an embodiment of the present disclosure is not limited thereto.

Although not illustrated in FIG. 8, according to an embodiment, the electronic device 101 may identify whether it is an indication target of the wake-up word. For example, the electronic device 101 may identify whether the indication target of the wake-up word is the electronic device 101. In other words, the electronic device 101 may identify whether a device to respond (or execute a function) to the wake-up word is the electronic device 101. For example, the electronic device 101 may identify whether the indication target of the wake-up word is the electronic device 101 based on the recognition result generated by the electronic device 101 and the first recognition result received from the one or more external electronic devices. For example, the electronic device 101 may identify the indication target based on a sound power level.

According to an embodiment, the electronic device 101 may execute a mode for receiving a voice signal. For example, the electronic device 101 may execute the mode for waiting for the reception of the voice signal after executing the designated function. For example, the mode may include a state in which the microphone (e.g., the microphone 411 of FIG. 4) included in the electronic device 101 is activated. The voice signal received in the state in which the mode is executed may include a command word.

FIG. 9 is a block diagram illustrating an integrated intelligence system according to various embodiments.

Referring to FIG. 9, an integrated intelligent system according to an embodiment may include an electronic device 101, an intelligent server 900 (e.g., the server 108 of FIG. 1), and a service server 990 (e.g., the server 108 of FIG. 1).

The electronic device 101 according to an embodiment may be a terminal device (or electronic device) connectable to the Internet, and for example, may be a mobile phone, a smart phone, a personal digital assistant (PDA), a notebook computer, a TV, white home appliance, a wearable device, an HMD, or a smart speaker.

According to the illustrated embodiment, the electronic device 101 may include an interface 177, an input module 150, an audio output module 155, a display module 160, memory 130, or a processor 120. The components listed above may be operably or electrically connected to each other.

The interface 177 according to an embodiment may be configured to be connected to an external device to transmit and receive data. The input module 150 according to an embodiment may receive sound (e.g., user utterance) and convert it into an electrical signal. The audio output module 155 according to an embodiment may output the electrical signal as sound (e.g., voice).

The display module 160 according to an embodiment may be configured to display an image or video. The display module 160 according to an embodiment may also display a graphic user interface (GUI) of an app (or application program) being executed. The display module 160 according to an embodiment may receive a touch input through a touch sensor. For example, the display module 160 may receive a text input through a touch sensor of an on-screen keyboard area displayed in the display module 160.

The memory 130 according to an embodiment may store a client module 151, a software development kit (SDK) 153, and a plurality of apps 146. The client module 151 and the SDK 153 may configure a framework (or, a solution program) for performing a general function. In addition, the client module 151 or the SDK 153 may configure a framework for processing a user input (e.g., voice input, text input, touch input).

The plurality of apps 146 stored in the memory 130 according to an embodiment may be programs for performing a specified function. According to an embodiment, the plurality of apps 146 may include a first app 146-1 and a second app 146-2. According to an embodiment, each of the plurality of apps 146 may include a plurality of operations for performing a specified function. For example, the apps may include an alarm app, a message app, and/or a schedule app. According to an embodiment, the plurality of apps 146 may be executed by the processor 120 to sequentially execute at least a portion of the plurality of operations.

The processor 120 according to an embodiment may control the overall operation of the electronic device 101. For example, the processor 120 may be electrically connected to the interface 177, the input module 150, the audio output module 155, and the display module 160 to perform a specified operation.

The processor 120 according to an embodiment may also execute a program stored in the memory 130 to perform a specified function. For example, the processor 120 may perform the following operation for processing a user input, by executing at least one of the client module 151 or the SDK 153. For example, the processor 120 may control operations of the plurality of apps 146 through the SDK 153. The following operation described as an operation of the client module 151 or the SDK 153 may be an operation by execution of the processor 120.

The client module 151 according to an embodiment may receive a user input. For example, the client module 151 may receive a voice signal corresponding to a user utterance detected through the input module 150. Alternatively, the client module 151 may receive a touch input detected through the display module 160. Alternatively, the client module 151 may receive a text input detected through a keyboard or an on-screen keyboard. In addition, various types of user input detected through an input module included in the electronic device 101 or an input module connected to the electronic device 101 may be received. The client module 151 may transmit the received user input to the intelligent server 900. The client module 151 may transmit state information of the electronic device 101 to the intelligent server 900, together with the received user input. For example, the state information may be execution state information of an app.

The client module 151 according to an embodiment may receive a result corresponding to the received user input. For example, when the intelligent server 900 may calculate a result corresponding to the received user input, the client module 151 may receive a result corresponding to the received voice input. The client module 151 may display the received result on the display module 160. In addition, the client module 151 may output the received result as audio through the sound output module 155.

The client module 151 according to an embodiment may receive a plan corresponding to the received user input. The client module 151 may display, on the display module 160, a result of executing a plurality of operations of the app according to the plan. For example, the client module 151 may sequentially display an execution result of the plurality of operations on the display and output audio through the sound output module 155. For another example, the electronic device 101 may display only a portion (e.g., a result of the last operation) of a result of executing the plurality of operations on the display module 160, and output it as audio through the sound output module 155.

According to an embodiment, the client module 151 may receive a request for obtaining information necessary to calculate a result corresponding to a user input from the intelligent server 900. According to an embodiment, the client module 151 may transmit the necessary information to the intelligent server 900, in response to the request.

The client module 151 according to an embodiment may transmit result information obtained by executing the plurality of operations according to the plan to the intelligent server 900. The intelligent server 900 may identify that a received user input has been correctly processed by using the result information.

The client module 151 according to an embodiment may include a voice recognition module. According to an embodiment, the client module 151 may recognize a voice input that performs a limited function through the voice recognition module. For example, the client module 151 may perform an intelligent app for processing a voice input to perform an organic operation through a specified input (e.g., wake-up!).

The intelligent server 900 according to an embodiment may receive information related to a user voice input from the electronic device 101 through a communication network. According to an embodiment, the intelligent server 900 may change data related to the received voice input into text data. According to an embodiment, the intelligent server 900 may generate a plan for performing a task corresponding to a user voice input, based on the text data.

According to an embodiment, the plan may be generated by an artificial intelligent (AI) system. The AI system may be a rule-based system, a neural network-based system (e.g., a feedforward neural network (FNN), or a recurrent neural network (RNN)). Alternatively, it may be a combination of the above or another AI system. According to an embodiment, a plan may be selected from a set of predefined plans, or may be generated in real time in response to a user request. For example, the AI system may select at least one plan from among a plurality of predefined plans.

The intelligent server 900 according to an embodiment may transmit a result according to the generated plan to the electronic device 101, or transmit the generated plan to the electronic device 101. According to an embodiment, the electronic device 101 may display, on the display module 160, the result according to the plan. According to an embodiment, the electronic device 101 may display, on the display module 160, a result of executing an operation according to a plan.

The intelligent server 900 according to an embodiment may include a front end 910, a natural language platform 920, a capsule DB 930, an execution engine 940, an end user interface 950, a management platform 960, a big data platform 970, or an analytic platform 980.

The front end 910 according toof an embodiment may receive a user input received from the electronic device 101. The front end 910 may transmit a response corresponding to the user input.

According to an embodiment, the natural language platform 920 may include an automatic speech recognition module (ASR module) 921, a natural language understanding module (NLU module) 923, a planner module 925, a natural language generator module (NLG module) 927, or a text to speech module (TTS module) 929.

The ASR module 921 according to an embodiment may convert a voice input received from the electronic device 101 into text data. The NLU module 923 according to an embodiment may identify the user's intent by using the text data of the voice input. For example, the NLU module 923 may identify the user's intent by performing syntactic analysis or semantic analysis on a user input in a form of text data. The NLU module 923 according to an embodiment may identify a meaning of a word extracted from a user input by using linguistic features (e.g., grammatical elements) of a morpheme or a phrase, and may determine the user's intent by matching the identified meaning of the word to the intent. The NLU module 923 may obtain intent information corresponding to the user's utterance. The intent information may be information indicating the user's intent determined by interpreting text data. The intent information may include information indicating an operation or a function that the user intends to execute using the device.

The planner module 925 according to an embodiment may generate a plan using the intent and parameter determined in the NLU module 923. According to an embodiment, the planner module 925 may determine a plurality of domains necessary to perform a task based on the determined intent. The planner module 925 may determine a plurality of actions included in each of a plurality of domains determined based on the intent. According to an embodiment, the planner module 925 may determine a parameter necessary to execute the plurality of determined actions, or a result value outputted by the execution of the plurality of actions. The parameter and the result value may be defined as a concept of a specified format (or class). Accordingly, the plan may include a plurality of actions and a plurality of concepts, which are determined by the user's intent. The planner module 925 may determine a relationship between the plurality of actions and the plurality of concepts in a stepwise (or hierarchical) manner. For example, the planner module 925 may determine an execution order of the plurality of actions determined based on the user's intent based on the plurality of concepts. In other words, the planner module 925 may determine the execution order of the plurality of actions, based on a parameter required for the execution of the plurality of actions and a result outputted by the execution of the plurality of actions. Accordingly, the planner module 925 may generate a plan including association information (e.g., ontology) between the plurality of actions and the plurality of concepts. The planner module 925 may generate a plan using information stored in a capsule database 930 in which a set of relationships between concepts and actions is stored.

The NLG module 927 according to an embodiment may change a specified information into text form. The information changed into text form may be in a form of natural language speech. The TTS module 929 according to an embodiment may change information in text form into information in voice form.

According to an embodiment, some or all of functions of the natural language platform 920 may also be implemented in the electronic device 101.

The capsule database 930 may store information on a relationship between actions and a plurality of concepts corresponding to a plurality of domains. According to an embodiment, a capsule may include a plurality of action objects (or action information) and concept objects (or concept information) included in a plan. According to an embodiment, the capsule database 930 may store a plurality of capsules in a form of a concept action network (CAN). According to an embodiment, the plurality of capsules may be stored in a function registry included in the capsule database 930.

The capsule database 930 may include a strategy registry in which strategy information required for determining a plan corresponding to a voice input is stored. The strategy information may include reference information for determining one plan when a plurality of plans corresponding to user inputs are present. According to an embodiment, the capsule database 930 may include a follow-up registry in which information of follow-up actions for suggesting follow-up actions to a user in a specified situation is stored. For example, the follow-up action may include a follow-up utterance. According to an embodiment, the capsule database 930 may include a layout registry that stores layout information of information outputted through the electronic device 101. According to an embodiment, the capsule database 930 may include a vocabulary registry that stores vocabulary information included in capsule information. According to an embodiment, the capsule database 930 may include a dialog registry in which information on a dialog (or interaction) with a user is stored. The capsule database 930 may update an object stored through a developer tool. For example, the developer tool may include a function editor for updating an action object or a concept object. The developer tool may include a vocabulary editor for updating the vocabulary. The developer tool may include a strategy editor for generating and registering a strategy for determining a plan. The developer tool may include a dialog editor for generating a dialog with a user. The developer tool may include a follow up editor for activating a follow up goal and editing a follow up utterance that provides a hint. The follow up goal may be determined based on a currently set goal, a user preference, or an environmental condition. In an embodiment, the capsule database 930 may also be implemented in the electronic device 101.

The execution engine 940 according to an embodiment may calculate a result by using the generated plan. The end user interface 950 may transmit the calculated result to the electronic device 101. Accordingly, the electronic device 101 may receive the result and provide the received result to the user. The management platform 960 according to an embodiment may manage information used in the intelligent server 900. The big data platform 970 according to an embodiment may collect user data. The analytic platform 980 according to an embodiment may manage a quality of service (QoS) of the intelligent server 900. For example, the analytic platform 980 may manage a component and a processing speed (or efficiency) of the intelligent server 900.

The service server 990 according to an embodiment may include a CP service A 991, a CP service B 992, and a CP service C 993. The service server 990 according to an embodiment may provide a specified service (e.g., food ordering or hotel reservation) to the electronic device 101. According to an embodiment, the service server 990 may be a server operated by a third party. The service server 990 according to an embodiment may provide, to the intelligent server 900, information for generating a plan corresponding to a received user input. The provided information may be stored in the capsule database 930. In addition, the service server 990 may provide result information according to the plan to the intelligent server 900.

In the integrated intelligence system of FIG. 9, the electronic device 101 may provide various intelligent services to the user in response to a user input. For example, the user input may include an input through a physical button, a touch input, or a voice input.

In an embodiment, the electronic device 101 may provide a voice recognition service through an intelligent app (or a voice recognition app) stored therein. In this case, for example, the electronic device 101 may recognize a user utterance or a voice input received via the microphone and provide a service corresponding to the recognized voice input to the user.

In an embodiment, the electronic device 101 may perform a specified operation, based on the received voice input, alone or together with the intelligent server and/or the service server. For example, the electronic device 101 may execute an app corresponding to the received voice input and perform a specified operation through the executed app.

In an embodiment, when the electronic device 101 provides a service together with the intelligent server 900 and/or the service server 990, the electronic device 101 may detect a user's utterance by using the input module 150 and generate a signal (or voice data) corresponding to the detected user's utterance. The electronic device 101 may transmit the voice data to the intelligent server 900 by using the interface 177.

The intelligent server 900 according to an embodiment may generate, as a response to a voice input received from the electronic device 101, a plan for performing a task corresponding to the voice input, or a result of performing an operation according to the plan. For example, the plan may include a plurality of actions for performing a task corresponding to a user's voice input, and a plurality of concepts related to the plurality of actions. The concept may define a parameter inputted by the execution of the plurality of actions, or a result value outputted by the execution of the plurality of actions. The plan may include association information between the plurality of actions and the plurality of concepts.

The electronic device 101 according to an embodiment may receive the response using the interface 177. The electronic device 101 may output a voice signal generated inside the electronic device 101 to the outside by using the audio output module 155, or may output an image generated inside the electronic device 101 to the outside by using the display module 160.

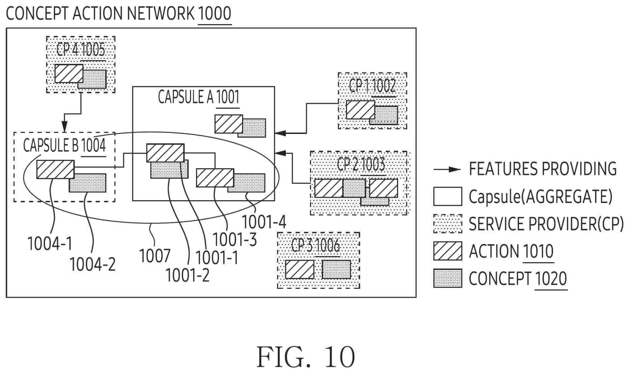

FIG. 10 is a diagram illustrating a form in which relationship information between a concept and an action is stored in a database according to various embodiments.

The capsule database (e.g., the capsule database 930 of FIG. 9) of the intelligent server (e.g., the intelligent server 900 of FIG. 9) may store a capsule in a form of a concept action network (CAN). The capsule database may store actions for processing a task corresponding to a user's voice input and a parameter necessary for the actions in the form of a concept action network (CAN).

The capsule database may store a plurality of capsules (e.g., capsule A 1001, capsule B 1004) corresponding to each of a plurality of domains (e.g., applications). According to an embodiment, one capsule (e.g., the capsule A 1001) may correspond to one domain (e.g., location (geo), application). In addition, one capsule may correspond to at least one service provider (e.g., CP 1 1002, CP 2 1003, CP 3 1006, or CP 4 1005) for performing a function for a domain related to a capsule. According to an embodiment, one capsule may include at least one action 1010 for performing a specified function and at least one concept 1020.

The natural language platform (e.g., the natural language platform 920 of FIG. 9) may generate a plan for performing a task corresponding to a voice input received using a capsule stored in a capsule database. For example, a planner module (e.g., the planner module 925 of FIG. 9) of the natural language platform may generate a plan by using a capsule stored in a capsule database. For example, a plan 1007 may be generated using actions 1001-1 and 1001-3 and concepts 1001-2 and 1001-4 of the capsule A 1001 and an action 1004-1 and a concept 1004-2 of the capsule B 1004.

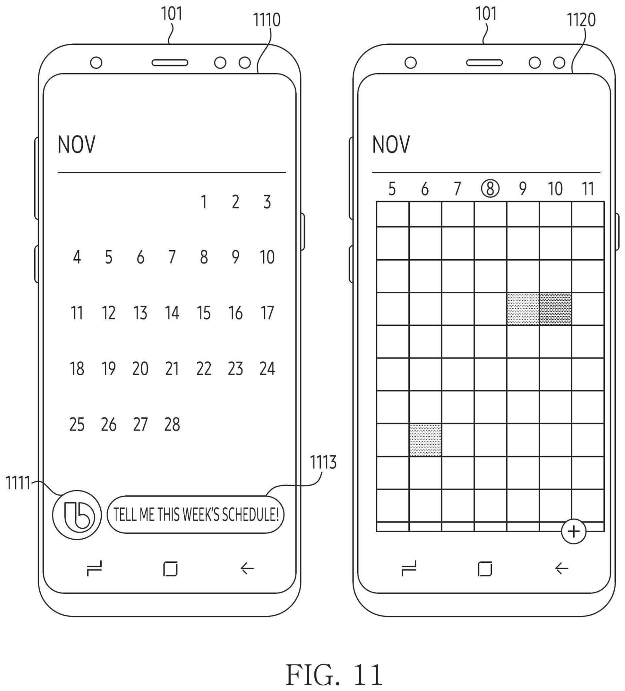

FIG. 11 is a diagram illustrating a screen in which an electronic device processes a voice input received through an intelligent app according to various embodiments.

The electronic device 101 may execute an intelligent app to process a user input through an intelligent server (e.g., the intelligent server 900 of FIG. 9).

According to an embodiment, in the screen 1110, when recognizing a specified voice input (e.g., wake up!) or receiving an input through a hardware key (e.g., a dedicated hardware key), the electronic device 101 may execute an intelligent app for processing the voice input. For example, the electronic device 101 may execute an intelligent app in a state of executing a schedule app. According to an embodiment, the electronic device 101 may display an object (e.g., icon) 1111 corresponding to an intelligent app on a display module (e.g., the display module 160 of FIG. 1). According to an embodiment, the electronic device 101 may receive a voice input by a user's utterance. For example, the electronic device 101 may receive a voice input such as "Tell me this week's schedule!". According to an embodiment, the electronic device 101 may display, on a display module (e.g., the display module 160 of FIG. 1), a user interface (UI) 1113 (e.g., input window) of an intelligent app in which text data of the received voice input is displayed.

According to an embodiment, in the screen 1120, the electronic device 101 may display a result corresponding to the received voice input on a display module (e.g., the display module 160 of FIG. 1). For example, the electronic device 101 may receive a plan corresponding to the received user input and display 'this week's schedule' on the display module 160 according to the plan.

An electronic device 101 or 105 as described above may include communication circuitry. The electronic device 101 or 105 may include memory including one or more storage media storing instructions. The electronic device 101 or 105 may include a microphone 411 or 451. The electronic device 101 or 105 may include at least one processor including processing circuitry. The instructions, when executed individually or collectively by the at least one processor, may cause the electronic device 101 or 105 to obtain a voice signal via the microphone 411 or 451. The instructions, when executed individually or collectively by the at least one processor, may cause the electronic device 101 or 105 to generate, from the voice signal including a wake-up word, a first recognition result for the wake-up word. The instructions, when executed individually or collectively by the at least one processor, may cause the electronic device 101 or 105 to transmit the first recognition result to a server 107 connected to one or more external electronic devices capable of recognizing the wake-up word. The instructions, when executed individually or collectively by the at least one processor, may cause the electronic device 101 or 105 to receive, from the server 107, a second recognition result for a user who uttered the wake-up word. The instructions, when executed individually or collectively by the at least one processor, may cause the electronic device 101 or 105 to execute, based on the second recognition result, a designated function with respect to the user in the electronic device 101 or 105. The second recognition result may include identification information indicating the user, obtained from an external electronic device 103, in which the user is registered, among the one or more external electronic devices.

According to an embodiment, the instructions, when executed individually or collectively by the at least one processor, may cause the electronic device 101 or 105 to extract a plurality of feature values from the voice signal. The instructions, when executed individually or collectively by the at least one processor, may cause the electronic device 101 or 105 to identify the wake-up word based on the plurality of feature values. The wake-up word may be used for executing each voice recognition function of the electronic device 101 or 105 and the one or more external electronic devices.

According to an embodiment, the first recognition result may include at least one of a recognition accuracy value of the wake-up word in the voice signal identified by the electronic device 101 or 105, a sound power level of the voice signal including the wake-up word, a signal-to-noise ratio (SNR) of the voice signal, or a timing at which the voice signal is obtained.

According to an embodiment, the second recognition result may include a third recognition result for the wake-up word transmitted from the one or more external electronic devices respectively and a fourth recognition result including the identification information. The third recognition result may be generated based on another voice signal including the wake-up word obtained by the one or more external electronic devices respectively. The fourth recognition result may be generated based on the other voice signal obtained by the external electronic device in which the user is registered.

According to an embodiment, the fourth recognition result may include at least one of the identification information of the user who uttered the wake-up word, group information in which the user is included, or a recognition accuracy value of the user.

According to an embodiment, the instructions, when executed individually or collectively by the at least one processor, may cause the electronic device 101 or 105 to identify, based on the first recognition result and the second recognition result, whether an indication target of the wake-up word is the electronic device. The instructions, when executed individually or collectively by the at least one processor, may cause the electronic device 101 or 105 to, based on identifying that the indication target is the electronic device 101 or 105, execute a mode for reception of a voice signal including a command word.

According to an embodiment, the designated function may include at least one of displaying a user interface for guiding that the electronic device 101 or 105 recognized the user or executing a software application requiring authentication of the user.

According to an embodiment, the instructions, when executed individually or collectively by the at least one processor, may cause the electronic device 101 or 105 to identify whether a speaker recognition model for recognizing the user identified based on the second recognition result is generated. The instructions, when executed individually or collectively by the at least one processor, may cause the electronic device 101 or 105 to, based on identifying that the speaker recognition model is not generated, perform training of the speaker recognition model with respect to the user by using the first recognition result.

According to an embodiment, the training of the speaker recognition model may be performed based on a designated number of voice signals with respect to the user. The designated number may be identified based on signal quality of the voice signal.

A method performed by an electronic device 101 or 105 as described above may include obtaining a voice signal. The method may include generating, from the voice signal including a wake-up word, a first recognition result for the wake-up word. The method may include transmitting the first recognition result to a server 107 connected to one or more external electronic devices capable of recognizing the wake-up word. The method may include receiving, from the server 107, a second recognition result for a user who uttered the wake-up word. The method may include executing, based on the second recognition result, a designated function with respect to the user in the electronic device 101 or 105. The second recognition result may include identification information indicating the user, obtained from an external electronic device 103, in which the user is registered, among the one or more external electronic devices.

A non-transitory computer-readable storage medium as described above, when executed individually or collectively by at least one processor of an electronic device 101 or 105 including communication circuitry and a microphone 411 or 451, may store one or more programs including instructions that cause the electronic device 101 or 105 to obtain a voice signal via the microphone 411 or 451. The non-transitory computer-readable storage medium, when executed individually or collectively by the at least one processor, may store one or more programs including instructions that cause the electronic device 101 or 105 to generate, from the voice signal including a wake-up word, a first recognition result for the wake-up word. The non-transitory computer-readable storage medium, when executed individually or collectively by the at least one processor, may store one or more programs including instructions that cause the electronic device 101 or 105 to transmit the first recognition result to a server 107 connected to one or more external electronic devices capable of recognizing the wake-up word. The non-transitory computer-readable storage medium, when executed individually or collectively by the at least one processor, may store one or more programs including instructions that cause the electronic device 101 or 105 to receive, from the server 107, a second recognition result for a user who uttered the wake-up word. The non-transitory computer-readable storage medium, when executed individually or collectively by the at least one processor, may store one or more programs including instructions that cause the electronic device 101 or 105 to execute, based on the second recognition result, a designated function with respect to the user in the electronic device 101 or 105. The second recognition result may include identification information indicating the user, obtained from an external electronic device 103, in which the user is registered, among the one or more external electronic devices.

An electronic device 101 or 105 as described above may include communication circuitry. The electronic device 101 or 105 may include a microphone 411 or 451. The electronic device 101 or 105 may include at least one processor. The at least one processor may be configured to obtain a voice signal via the microphone 411 or 451. The at least one processor may be configured to generate, from the voice signal including a wake-up word, a first recognition result for the wake-up word. The at least one processor may be configured to broadcast the first recognition result to one or more external electronic devices capable of recognizing the wake-up word. The at least one processor may be configured to receive a second recognition result for the wake-up word broadcast from an external electronic device 103 in which the user is registered among the one or more external electronic devices and a third recognition result for a user who uttered the wake-up word. The at least one processor may be configured to execute, based on the third recognition result, a designated function with respect to the user in the electronic device 101 or 105. The third recognition result may include identification information indicating the user.

According to an embodiment, the at least one processor may be configured to extract a plurality of feature values from the voice signal. The at least one processor may be configured to identify the wake-up word based on the plurality of feature values. The wake-up word may be used for executing each voice recognition function of the electronic device 101 or 105 and the one or more external electronic devices.

According to an embodiment, the first recognition result may include at least one of a recognition accuracy value of the wake-up word in the voice signal identified by the electronic device 101 or 105, a sound power level of the voice signal including the wake-up word, a signal-to-noise ratio (SNR) of the voice signal, or a timing at which the voice signal is obtained.

According to an embodiment, each of the second recognition result and the third recognition result may be generated based on another voice signal including the wake-up word obtained by the external electronic device.

According to an embodiment, the third recognition result may include at least one of the identification information of the user who uttered the wake-up word, group information in which the user is included, or a recognition accuracy value of the user.

According to an embodiment, the at least one processor may be configured to identify, based on the first recognition result, the second recognition result, and the third recognition result, whether an indication target of the wake-up word is the electronic device. The at least one processor may be configured to, based on identifying that the indication target is the electronic device 101 or 105, execute a mode for reception of a voice signal including a command word.

According to an embodiment, the designated function may include at least one of displaying a user interface for guiding that the electronic device 101 or 105 recognized the user or executing a software application requiring authentication of the user.

According to an embodiment, the at least one processor may be configured to identify whether a speaker recognition model for recognizing the user identified based on the third recognition result is generated. The at least one processor may be configured to, based on identifying that the speaker recognition model is not generated, perform training of the speaker recognition model with respect to the user by using the first recognition result.

According to an embodiment, the training of the speaker recognition model may be performed based on a designated number of voice signals with respect to the user. The designated number may be identified based on signal quality of the voice signal.

A method performed by an electronic device 101 or 105 as described above may include obtaining a voice signal. The method may include generating, from the voice signal including a wake-up word, a first recognition result for the wake-up word. The method may include broadcasting the first recognition result to one or more external electronic devices capable of recognizing the wake-up word. The method may include receiving a second recognition result for the wake-up word broadcast from an external electronic device 103 in which the user is registered among the one or more external electronic devices and a third recognition result for a user who uttered the wake-up word. The method may include executing, based on the third recognition result, a designated function with respect to the user in the electronic device 101 or 105. The third recognition result may include identification information indicating the user.

A non-transitory computer-readable storage medium as described above, when executed by at least one processor of an electronic device 101 or 105 including communication circuitry and a microphone 411 or 451, may store one or more programs including instructions that cause the electronic device 101 or 105 to obtain a voice signal via the microphone 411 or 451. The non-transitory computer-readable storage medium, when executed by the at least one processor, may store one or more programs including instructions that cause the electronic device 101 or 105 to generate, from the voice signal including a wake-up word, a first recognition result for the wake-up word. The non-transitory computer-readable storage medium, when executed by the at least one processor, may store one or more programs including instructions that cause the electronic device 101 or 105 to broadcast the first recognition result to one or more external electronic devices capable of recognizing the wake-up word. The non-transitory computer-readable storage medium, when executed by the at least one processor, may store one or more programs including instructions that cause the electronic device 101 or 105 to receive a second recognition result for the wake-up word broadcast from an external electronic device 103 in which the user is registered among the one or more external electronic devices and a third recognition result for a user who uttered the wake-up word. The non-transitory computer-readable storage medium, when executed by the at least one processor, may store one or more programs including instructions that cause the electronic device 101 or 105 to execute, based on the third recognition result, a designated function with respect to the user in the electronic device 101 or 105. The third recognition result may include identification information indicating the user.

An electronic device 103 as described above may include communication circuitry. The electronic device 103 may include a microphone 431. The electronic device 103 may include at least one processor. The at least one processor may be configured to obtain a voice signal via the microphone 431. The at least one processor may be configured to identify, from the voice signal including a wake-up word, a user who uttered the voice signal. The at least one processor may be configured to transmit a signal including a first recognition result for the wake-up word and a second recognition result for the user to a server 107 connected to one or more external electronic devices 101 and 105 capable of recognizing the wake-up word based on identifying that the user is a user registered in the electronic device 103. The first recognition result may include at least one of a recognition accuracy value of the wake-up word in the voice signal identified by the electronic device 103, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

According to an embodiment, the at least one processor may be configured to identify, based on the first recognition result and the second recognition result, whether an indication target of the wake-up word is the electronic device 103. The at least one processor may be configured to, based on identifying that the indication target is the electronic device 103, execute a mode for reception of a voice signal including a command word.

A method performed by an electronic device 103 as described above may include obtaining a voice signal. The method may include identifying, from the voice signal including a wake-up word, a user who uttered the voice signal. The method may include transmitting a signal including a first recognition result for the wake-up word and a second recognition result for the user to a server 107 connected to one or more external electronic devices 101 and 105 capable of recognizing the wake-up word based on identifying that the user is a user registered in the electronic device 103. The first recognition result may include at least one of a recognition accuracy value of the wake-up word in the voice signal identified by the electronic device 103, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

A non-transitory computer-readable storage medium as described above, when executed by at least one processor of an electronic device 103 including communication circuitry and a microphone 431, may store one or more programs including instructions that cause the electronic device 103 to obtain a voice signal via the microphone 431. The non-transitory computer-readable storage medium, when executed by the at least one processor, may store one or more programs including instructions that cause the electronic device 103 to identify, from the voice signal including a wake-up word, a user who uttered the voice signal. The non-transitory computer-readable storage medium, when executed by the at least one processor, may store one or more programs including instructions that cause the electronic device 103 to transmit a signal including a first recognition result for the wake-up word and a second recognition result for the user to a server 107 connected to one or more external electronic devices 101 and 105 capable of recognizing the wake-up word based on identifying that the user is a user registered in the electronic device 103. The first recognition result may include at least one of a recognition accuracy value of the wake-up word in the voice signal identified by the electronic device 103, a sound power level of the voice signal including the wake-up word, a signal-to-noise ratio (SNR) of the voice signal, or a timing at which the voice signal is obtained. The second recognition result may include at least one of the identification information of the user who uttered the wake-up word, group information in which the user is included, or a recognition accuracy value of the user.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 105) comprising:
memory comprising one or more storage media storing instructions;
communication circuity;
a microphone (411, 451); and
at least one processor including processing circuitry;
wherein the instructions, when executed by the at least one processor, cause the eletronic device (101, 105) to:
obtain a voice signal via the microphone (411, 451);
generate, from the voice signal including a wake-up word, a first recognition result for the wake-up word;
transmit the first recognition result to a server (107) connected to one or more external eletronic devices capable of recognizing the wake-up word;
receive, from the server (107), a second recognition result for a user who uttered the wake-up word; and
execute, based on the second recognition result, a designated function with respect to the user,
wherein the second recognition result includes identification information indicating the user, obtained from an external eletronic device (103), in which the user is registered, among the one or more external eletronic devices.

2. The eletronic device (101, 105) of claim 1,
wherein the instructions, when executed by the at least one processor, cause the eletronic device (101, 105) to:
extract a plurality of feature values from the voice signal; and
identify the wake-up word based on the plurality of feature values,
wherein the wake-up word is used for executing each voice recognition function of the eletronic device (101, 105) and the one or more external eletronic devices.

3. The eletronic device (101, 105) of claim 1,
wherein the first recognition value includes at least one of a recognition accuracy value of the wake-up word in the voice signal identified by the eletronic device (101, 105), sound power level of the voice signal including the wake-up word, signal to noise ratio (SNR) of the voice signal, or timing at which the voice signal is obtained.

4. The eletronic device (101, 105) of claim 1,
wherein the second recognition result a third recognition result for the wake-up word transmitted from the one or more external eletronic devices respectively and a fourth recognition result including the identification information,
wherein the third recognition result is generated based on another voice signal including the wake-up word obtained by the one or more external eletronic devices respectively, and
wherein the fourth recognition result is generated based on the another voice signal obtained by the external eletronic device in which the user is registered.

5. The eletronic device (101, 105) of claim 4,
wherein the fourth recognition result includes at least one of the identification information of the user who uttered the wake-up word, group information in which the user is included, or a recognition accuracy value of the user.

6. The eletronic device (101, 105) of claim 1,
wherein the instructions, when executed by the at least one processor, cause the eletronic device (101, 105) to:
identify, based on the first recognition result and the second recognition result, whether an indication target of the wake-up word is the eletronic device; and
based on identifying that the indication target is the eletronic device (101, 105), execute a mode for a reception of a voice signal including a command word.

7. The eletronic device (101, 105) of claim 1,
wherein the designated function includes at least one of displaying the user interface for guiding that the eletronic device (101, 105) recognized the user or executing a software application requiring an authentication of the user.

8. The eletronic device (101, 105) of claim 1,
wherein the instructions, when executed by the at least one processor, cause the eletronic device (101, 105) to:
identify whether a speaker recognition model for recognizing the user identified based on the second recognition result is generated; and
based on identifying that the speaker recognition model is not generated, implement a training of the speaker recognition model with respect to the user by using the first recognition result.

9. The eletronic device (101, 105) of claim 8,
wherein the training of the speaker recognition model is implemented based on a designated number of voice signals with respect to the user, and
wherein the designated number is identified based on signal quality of the voice signal.

10. A method performed by an eletronic device (101, 105) comprising:
obtaining a voice signal via a microphone (411, 451);
generating, from the voice signal including a wake-up word, a first recognition result for the wake-up word;
transmitting the first recognition result to a server (107) connected to one or more external eletronic devices capable of recognizing the wake-up word;
receiving, from the server (107), a second recognition result for a user who uttered the wake-up word; and
executing, based on the second recognition result, a designated function with respect to the user,
wherein the second recognition result includes identification information indicating the user, obtained from an external eletronic device (103), in which the user is registered, among the one or more external eletronic devices.

11. The method of claim 10, comprising:
extracting a plurality of feature values from the voice signal; and
identifying the wake-up word based on the plurality of feature values,
wherein the wake-up word is used for executing each voice recognition function of the eletronic device (101, 105) and the one or more external eletronic devices.

12. The method of claim 10,
wherein the first recognition value includes at least one of a recognition accuracy value of the wake-up word in the voice signal identified by the eletronic device (101, 105), sound power level of the voice signal including the wake-up word, signal to noise ratio (SNR) of the voice signal, or timing at which the voice signal is obtained.

13. The method of claim 10,
wherein the second recognition result a third recognition result for the wake-up word transmitted from the one or more external eletronic devices respectively and a fourth recognition result including the identification information,
wherein the third recognition result is generated based on another voice signal including the wake-up word obtained by the one or more external eletronic devices respectively, and
wherein the fourth recognition result is generated based on the another voice signal obtained by the external eletronic device in which the user is registered.

14. The method of claim 13,
wherein the fourth recognition result includes at least one of the identification information of the user who uttered the wake-up word, group information in which the user is included, or a recognition accuracy value of the user.

15. A non-transitory computer-readable storage medium, when executed individually or collectively by at least one processor of an eletronic device (101, 105) including communication circuitry and a microphone (411, 451), storing one or more programs including instructions that cause the eletronic device (101, 105) to:
obtain a voice signal via the microphone (411, 451);
generate, from the voice signal including a wake-up word, a first recognition result for the wake-up word;
transmit the first recognition result to a server (107) connected to one or more external eletronic devices capable of recognizing the wake-up word;
receive, from the server (107), a second recognition result for a user who uttered the wake-up word; and
execute, based on the second recognition result, a designated function with respect to the user,
wherein the second recognition result includes identification information indicating the user, obtained from an external eletronic device (103), in which the user is registered, among the one or more external eletronic devices.
